# EUROPEAN PATENT SPECIFICATION

(11) **EP 2 816 887 B1**
(45) Date of publication and mention of the grant of the patent: **01.02.2017**
(21) Application number: 13713249.4
(22) Date of filing: 25.02.2013
(51) Int. Cl.: A01F 15/07

(54) **A METHOD AND A SYSTEM FOR CONTROLLING CIRCUMFERENTIAL WRAPPING OF A CYLINDRICAL BALE IN A BALE FORMING CHAMBER OF A BALER, AND A BALER AND A METHOD FOR PRODUCING A CIRCUMFERENTIALLY WRAPPED BALE**
VERFAHREN UND SYSTEM ZUR STEUERUNG DER UMHÜLLUNG EINES ZYLINDRISCHEN BALLENS IN DER BALLENFORMUNGSKAMMER EINER BALLENPRESSE SOWIE BALLENPRESSE UND VERFAHREN ZUR HERSTELLUNG EINES UMHÜLLTEN BALLENS
PROCÉDÉ ET SYSTÈME PERMETTANT DE CONTRÔLER L'EMBALLAGE CIRCONFÉRENTIEL D'UNE BALLE CYLINDRIQUE DANS UNE CHAMBRE DE FORMATION DE BALLES D'UNE RAMASSEUSE-PRESSE, ET RAMASSEUSE-PRESSE ET PROCÉDÉ DE PRODUCTION D'UNE BALLE EMBALLÉE DE FAÇON CIRCONFÉRENTIELLE

(30) Priority: 24.02.2012 IE S20120099
(43) Date of publication of application: 31.12.2014
(73) Proprietor: McHale Engineering, Ballinrobe, County Mayo (IE)
(72) Inventor: MCHALE, Padraic Christopher, Clonbur County Galway (IE); MCHALE, Martin William, County Mayo (IE); HEANEY, James John, Claremorris County Mayo (IE); SHERIDAN, Gerard Patrick, Kilmaine County Mayo (IE); COLLINS, Donal Patrick, Dunmore County Galway (IE); MCDERMOTT, Karol Angelo, Moville County Donegal (IE)
(74) Representative: Gorman, Francis Fergus
(86) International application number: PCT/IE2013/000006
(87) International publication number: WO 2013/124836

(56) References cited:
- EP-A2- 2 119 343
- DE-A1- 19 720 489
- US-A- 5 729 953
- US-A- 6 050 052
- US-A1- 2012 240 527

## Description

The present invention relates to a method and a system for circumferentially wrapping a cylindrical bale in a bale forming chamber of a baler with wrapping material drawn from a roll thereof, whereby the wrapping material is applied to the bale with a predefined degree of stretch in the wrapping material in the feed direction of the wrapping material. In particular, though not limited, the invention relates to a method and system for circumferentially wrapping a cylindrical bale in a bale forming chamber of a baler with plastics film wrapping material drawn from a roll thereof whereby the plastics film wrapping material is applied to the bale with a predefined degree of stretch in the feed direction of the wrapping material. The invention also relates to a baler comprising the system, and the invention also relates to a method for forming and circumferentially wrapping a cylindrical bale.

Balers for forming cylindrical bales of material are well known, and are extensively used for forming cylindrical bales of forage material, for example, hay, straw, silage and the like. Such cylindrical bales are commonly referred to as round bales. Such balers may be fixed chamber balers, whereby the diameter of the bale forming chamber is fixed, or variable chamber balers whereby the diameter of the bale forming chamber is variable. Fixed chamber balers comprise a plurality of circumferentially spaced apart bale rotating rollers which define the circumferential periphery of the bale forming chamber. Variable chamber balers, in general, are referred to as belt balers, and the bale forming chamber is formed by a plurality of tensioned belts which are arranged to define the bale forming chamber. However, as the bale is being formed in the bale forming chamber defined by the belts, the belts are configured to allow the diameter of the bale forming chamber to increase.

Prior to discharging a formed bale from the bale forming chamber of either a fixed or a variable chamber baler, it is essential that the bale be circumferentially wrapped in the bale forming chamber in order to retain the forage material together in the form of a bale when the bale is discharged from the baler. Circumferential wrapping of bales in bale forming chambers has in the past been carried out by feeding a netting material into the bale forming chamber as the formed bale is rotating therein, so that as the bale rotates in the bale forming chamber, the netting material is drawn around the rotating bale and tightly wraps the bale in the bale forming chamber.

More recently, plastics film wrapping material has been used to circumferentially wrap a formed bale in the bale forming chamber of such balers. The plastics film wrapping material is fed into the bale forming chamber as the formed bale is rotating therein, and is drawn around the circumference of the rotating bale in the bale forming chamber. The wrapping film may or may not be coated on one surface thereof with a light adhesive coating, which is provided on the surface which is to abut the circumferential surface of the bale. Where the wrapping film is adhesive coated, once the wrapping film begins to overlap the first turn of the wrapping film extending circumferentially around the bale, the self-adhesive coating of the wrapping film retains the bale circumferentially wrapped when discharged from the bale forming chamber. However, in many cases the bale may be circumferentially wrapped in the bale forming chamber with more than one turn of the wrapping film, and in many cases may be circumferentially wrapped with four turns of the wrapping film, and in some cases the bale may be circumferentially wrapped with up to eight turns of the wrapping film. In cases where the wrapping film is not adhesive coated, in general, three or four turns of the wrapping film around the bale is sufficient to retain the bale together.

In order that the bale is tightly wrapped with the plastics film wrapping material, the wrapping film is tensioned as it is being applied to the bale. The tensioning of the wrapping film is achieved by feeding the wrapping film from a roll through a tensioning means, which typically is provided by a tensioning roller in order to induce tension into the wrapping film as the wrapping film is being applied to the circumferential surface of the bale in the bale forming chamber. This results in the wrapping film being applied to the bale with a degree of stretch in the plastics film wrapping material in the feed direction in which the wrapping film is fed to the bale. Applying the plastics film wrapping material to the bale with the wrapping film stretched has two advantages, firstly, and primarily, it ensures that the bale is tightly circumferentially wrapped, and secondly, the amount of wrapping film required to circumferentially wrap a bale with a given number of turns is reduced, with consequent cost savings.

In general, balers in which the bale is circumferentially wrapped in the bale forming chamber with plastics wrapping film material are provided with a cradle for supporting a roll of the plastics film wrapping material, and a tensioning roller over which the wrapping film is drawn from the roll of wrapping film is provided adjacent the cradle. The wrapping film is then stretched between the tensioning roller and the bale by tension induced by the tensioning roller in the wrapping film between the tensioning roller and the bale.

It has been found that plastics film wrapping material is not nearly as stable a material as netting material, and in particular, it has been found that plastics film wrapping material is temperature unstable. Thus, depending on the temperature of the environment in which the baler is operating and the temperature of the wrapping film, the degree of stretch with which the plastics film wrapping material is applied to the bale can vary dramatically for a given tension. In certain cases, in particularly high temperature environments, the degree of stretch with which the wrapping film is applied to the bale is such that either the thickness of the wrapping film is so thin that it can rupture on the bale being discharged from the bale forming chamber, or the width of the plastics film wrapping material may decrease, to the extent that the entire width of the circumferential surface of the bale is not covered with the plastics film wrapping material. Additionally, the bale may not be wrapped with the appropriate degree of tightness. A further problem which can result from overstretching of the wrapping film arises where the wrapping film contains areas of imperfection, for example, areas of weakness. In such cases where the wrapping film is over-stretched, holes may be formed in the stretched wrapping film, particularly adjacent such areas of weakness and imperfections in the wrapping film. It has been found that because of the degree to which the wrapping film has been stretched around the circumferential surface of the bale, the impact of the circumferentially wrapped bale with the ground as the bale is being discharged from the baler can result in severing of the wrapping material, with the consequent unravelling and disintegration of the bale.

Variations in the degree of stretching in wrapping material for a given tension may also result from variations in the consistency and/or properties of the wrapping material from roll to roll of wrapping material and within the same roll of wrapping material.

This is entirely unsatisfactory, and there is therefore a need for a method and system for controlling circumferential wrapping of a cylindrical bale in a bale forming chamber of a baler with wrapping material which addresses this problem.

European Patent Specification No. 2,119,343 A2 of McClure discloses a baler for forming cylindrical bales of fodder material. The baler comprises a wrapping material dispensing system from which wrapping material is dispensed from a roll of the wrapping material into a bale forming chamber of the baler for circumferentially wrapping a formed bale therein. A braking device acts on the roll from which wrapping material is being dispensed, and the braking device is controlled to apply a braking force profile to the roll with different levels of braking force during respective discrete wrapping phases of wrapping of the bale, which in turn controls the tension in the wrapping material being applied to the bale during the respective discrete phases of the wrapping of the bale.

The present invention is directed towards providing such a method and a system, and the invention is also directed towards providing a baler incorporating the system, and to a method for forming material into a cylindrical bale and circumferentially wrapping the bale with wrapping material.

According to the invention there is provided a method for controlling circumferentially wrapping a cylindrical bale rotating in a bale forming chamber of a baler with wrapping material drawn from a roll thereof through a tensioning means, so that the bale is wrapped with the wrapping material with a predefined degree of stretch in the wrapping material in the feed direction thereof, wherein the method comprises:
monitoring a value of a characteristic indicative of the linear speed of the wrapping material at a first location adjacent the bale,
monitoring a value of a characteristic indicative of the linear speed of the wrapping material at a second location before tensioning thereof by the tensioning means,
computing the value of the degree of stretch in the wrapping material in the feed direction with which the wrapping material is being applied to the bale from the monitored values of the characteristics indicative of the linear speeds of the wrapping material at the first and second locations, and
altering the linear speed of the wrapping material adjacent one of the first and second locations relative to the linear speed of the wrapping material adjacent the other one of the first and second locations in response to the computed value of the degree of stretch not being equal to the value of the predefined degree of stretch until the wrapping material is being applied to the bale with the predefined degree of stretch.

In one aspect of the invention the monitored characteristic indicative of the linear speed of the wrapping material adjacent the first location comprises one of:
the rotational speed of the bale, and
the rotational speed of a first wrapping material follower roller engageable with and rotatable with the wrapping material adjacent the first location.

Preferably, the rotational speed of the bale is monitored by monitoring one of:
the rotational speed of a bale rotating roller rotating the bale in the bale forming chamber,
the linear speed of a bale rotating belt rotating the bale in the bale forming chamber, and
the rotational speed of a bale follower roller engageable with and rotatable with the bale.

In one aspect of the invention the second location comprises a location adjacent one of the tensioning means and the roll of the wrapping material.

In another aspect of the invention the monitored characteristic indicative of the linear speed of the wrapping material adjacent the second location comprises one of:
the rotational speed of a tensioning roller of the tensioning means, and
the rotational speed of a second wrapping material follower roller engageable with and rotatable with the wrapping material adjacent the second location.

Preferably, the linear speed of the wrapping material adjacent the second location is altered in response to the computed value of the degree of stretch in the feed direction of the wrapping material being applied to the bale not being equal to the value of the predefined degree of stretch.

In one aspect of the invention the linear speed of the wrapping material adjacent the second location is altered by altering the tension induced in the wrapping material in the feed direction between the tensioning means and the bale. Preferably, the linear speed of the wrapping material adjacent the second location is altered by altering the tension induced in the wrapping material by the tensioning means.

In another aspect of the invention the degree of stretch in the feed direction in the wrapping material with which the wrapping material is being applied to the bale is computed by determining the ratio of the difference of the linear speeds of the wrapping material adjacent the first and second locations to the linear speed of the wrapping material adjacent the second location.

Preferably, the value of the predefined degree of stretch is selectable.

In one embodiment of the invention the tension induced in the wrapping material by the tensioning means is maintained at a minimal value during initial feeding of the wrapping material into the bale forming chamber until the wrapping material is engaged between the rotating bale and one of a bale rotating roller and a bale rotating belt rotating the bale in the bale forming chamber.

In another embodiment of the invention the tension induced in the wrapping material by the tensioning means is reduced to a minimal value on completion of circumferential wrapping of the bale in the bale forming chamber.

In one aspect of the invention the wrapping material comprises a film wrapping material.

In another aspect of the invention the wrapping material comprises a plastics film material.

In another aspect of the invention the wrapping material comprises a self-adhesive coating on one side thereof.

In one aspect of the invention the bale comprises a bale of forage material.

In another aspect of the invention the bale comprises a bale of silage.

The invention also provides a system for controlling circumferentially wrapping a cylindrical bale rotating in a bale forming chamber of a baler with wrapping material drawn from a roll thereof through a tensioning means, so that the bale is wrapped with the wrapping material with a predefined degree of stretch in the wrapping material in the feed direction, wherein the system comprises:
a first monitoring means configured to monitor a value of a characteristic indicative of the linear speed of the wrapping material at a first location adjacent the bale,
a second monitoring means configured to monitor a value of a characteristic indicative of the linear speed of the wrapping material at a second location before tensioning thereof by the tensioning means,
a computing means configured to read signals from the first and second monitoring means indicative of the monitored values of the characteristics of the linear speed of the wrapping material at the first and second locations, and to compute the value of the degree of stretch in the wrapping material in the feed direction with which the wrapping material is being applied to the bale from the signals read from the first and second monitoring means, and
a control means for altering the linear speed of the wrapping material adjacent one of the first and second locations relative to the linear speed of the wrapping material adjacent the other one of the first and second locations in response to the computed value of the degree of stretch not being equal to the value of the predefined degree of stretch until the wrapping material is being applied to the bale with the predefined degree of stretch.

In one aspect of the invention the first monitoring means is configured to monitor one of:
the rotational speed of the bale, and
the rotational speed of a first wrapping material follower roller engageable with and rotatable with the wrapping material adjacent the first location.

In another aspect of the invention the first monitoring means is configured to monitor the rotational speed of the bale by monitoring one of:
the rotational speed of a bale rotating roller rotating the bale in the bale forming chamber,
the linear speed of a bale rotating belt rotating the bale in the bale forming chamber, and
the rotational speed of a bale follower roller engageable with and rotatable with the bale.

Preferably, the first monitoring means is configured to monitor the rotational speed of a roller about which the bale rotating belt passes for monitoring the linear speed of the bale rotating belt. Advantageously, the first monitoring means comprises a first rotary encoder.

In one aspect of the invention the second monitoring means is configured to monitor the linear speed of the wrapping material adjacent one of the tensioning means and the roll of the wrapping material.

In another aspect of the invention the second monitoring means is configured to monitor one of:
the rotational speed of a tensioning roller of the tensioning means, and
the rotational speed of a second wrapping material follower roller engageable with and rotatable with the wrapping material adjacent the second location.

Preferably, the second monitoring means comprises a second rotary encoder.

In another aspect of the invention the computing means comprises a signal processor configured to compute the value of the degree of stretch in the feed direction in the wrapping material being applied to the bale from signals read from the first and second monitoring means.

Preferably, the signal processor is configured to compute the value of the degree of stretch in the feed direction in the wrapping material with which the wrapping material is being applied to the bale by determining the ratio of the difference of the linear speeds of the wrapping material adjacent the first and second locations to the linear speed of the wrapping material adjacent the second location.

In one aspect of the invention the signal processor is configured to compare the computed value of the degree of stretch with which the wrapping material is being applied to the bale with the value of the predefined degree of stretch.

Preferably, a storing means is provided for storing the value of the predefined degree of stretch.

Advantageously, the value of the predefined degree of stretch is selectable.

In another aspect of the invention the control means is configured to alter the linear speed of the wrapping material adjacent the second location in response to the computed value of the degree of stretch in the feed direction in the wrapping material being applied to the bale not being equal to the value of the predefined degree of stretch.

Preferably, the control means is configured to alter the speed of the tensioning roller of the tensioning means for altering the linear speed of the wrapping material adjacent the second location. Advantageously, the control means is configured to control the tensioning means for varying the tension induced in the wrapping material in the feed direction between the tensioning means and the bale by the tensioning means for varying the linear speed of the wrapping material adjacent the second location.

In one embodiment of the invention the tensioning means comprises an hydraulic rotary torque control pump operably connected to the tensioning roller for applying a torsional load to the tensioning roller, and the control means comprises a pressure control means in an hydraulic circuit with the torque control pump for controlling the pressure of hydraulic fluid in the hydraulic circuit against which the torque control pump must pump.

Preferably, the pressure control means comprises a solenoid operated proportional pressure relief valve, the proportional pressure relief valve being responsive to a signal from the signal processor. Advantageously, the proportional pressure relief valve is responsive to a pulse width modulated signal produced under the control of the signal processor.

In one aspect of the invention the control means is configured to control the tensioning means to maintain the tension induced in the wrapping material at a minimal value during initial feeding of the wrapping material into the bale forming chamber until the wrapping material is engaged between the rotating bale and one of a bale rotating roller and a bale rotating belt rotating the bale in the bale forming chamber.

In another aspect of the invention the control means is configured to control the tensioning means to reduce the tension induced in the wrapping material to a minimal value on completion of circumferential wrapping of the bale in the bale forming chamber.

Further the invention provides a baler for forming a circumferentially wrapped cylindrical bale, the baler comprising a bale forming chamber within which the bale is formed, a wrapping material dispenser for dispensing wrapping material from a roll thereof through a tensioning means into the bale forming chamber for circumferentially wrapping the bale in the bale forming chamber, wherein a system according to the invention is provided for controlling circumferential wrapping of the bale in the bale forming chamber so that the wrapping material is applied to the bale with a predefined degree of stretch in the feed direction of the wrapping material.

In one aspect of the invention the baler comprises a plurality of bale rotating rollers for rotating the bale in the bale forming chamber, the bale rotating rollers defining the circumferential periphery of the bale forming chamber and being circumferentially spaced apart around the periphery of the bale forming chamber, and the first monitoring means is configured to monitor the rotational speed of one of the bale rotating rollers.

In another aspect of the invention the circumferential periphery of the bale forming chamber is defined at least partly by a bale rotating belt, and the first monitoring means is configured to monitor the rotational speed of a roller around which the bale rotating belt passes.

In a further aspect of the invention the baler is adapted for wrapping the bale with a plastics film wrapping material.

In another aspect of the invention the baler is adapted for forming a bale of forage material.

Additionally, the invention provides a method for forming material into a cylindrical bale and circumferentially wrapping the bale with wrapping material, the method comprising:
feeding the material to be baled into a bale forming chamber of a baler,
rotating the material to be baled in the bale forming chamber to form the bale, and
feeding the wrapping material through a tensioning means into the bale forming chamber to circumferentially wrap the formed bale rotating in the bale forming chamber, wherein the method further comprises:
   monitoring a value of a characteristic indicative of the linear speed of the wrapping material at a first location adjacent the bale,
   monitoring a value of a characteristic indicative of the linear speed of the wrapping material at a second location before tensioning thereof by the tensioning means,
   computing the value of a degree of stretch in the wrapping film in the feed direction with which the wrapping material is being applied to the bale from the monitored values of the characteristics indicative of the linear speeds of the wrapping material adjacent the first and second locations, and
   altering the linear speed of the wrapping material adjacent one of the first and second locations relative to the linear speed of the wrapping material adjacent the other one of the first and second locations in response to the computed value of the degree of stretch not being equal to the value of a predefined degree of stretch until the wrapping material is being applied to the bale with the predefined degree of stretch.

The advantages of the invention are many. The system and method according to the invention allow bales to be circumferentially wrapped with a substantially constant predefined degree of stretch in the feed direction of the wrapping material irrespective of variations in temperature of the external environment in which the bales are being formed and circumferentially wrapped, and irrespective of variations in temperature of the wrapping material and in the roll of the wrapping material. Additionally, the bales are circumferentially wrapped with a substantially constant predefined degree of stretch in the feed direction of the wrapping material irrespective of variations in properties of the wrapping material within a roll of the wrapping material, and irrespective of variations in properties of wrapping material from one roll of wrapping material to another roll of wrapping material.

By virtue of the fact that the bales are circumferentially wrapped with a constant predefined degree of stretch in the feed direction of the wrapping material, the bales are consistently circumferentially wrapped with a substantially constant level of tightness, and additionally, the bales are circumferentially wrapped with the wrapping material of substantially constant thickness.

Accordingly, the method and system allow for circumferential wrapping of bales in a bale forming chamber with a substantially constant level of tightness and a substantially constant thickness of wrapping material irrespective of the temperature of the wrapping material, the temperature of the environment in which the circumferential wrapping of the bale is taking place, and irrespective of variations in properties of the wrapping material within a roll of the wrapping material and from roll to roll of the wrapping material.

A further advantage of the invention is that the system according to the invention permits wrapping material of different types, different widths, different thicknesses, and indeed different materials to be used for wrapping bales without having to manually monitor and manually control the operation of the baler in order to apply the wrapping material to the bale in the bale forming chamber with a predefined degree of stretch in the feed direction of the wrapping material. By virtue of the fact that the system automatically controls the degree of stretch with which the wrapping material is being applied to the rotating bale in the bale forming chamber, once the value of the predefined degree of stretch has been selected and entered into the system according to the invention of the baler, the degree of stretch with which the wrapping material is applied to the bale is automatically controlled by the system. This is so irrespective of the type of wrapping material, its thickness, the type of material and other characteristics of the wrapping material.

A further advantage of the invention is that it avoids any danger of the wrapping material being stretched to an extent which exceeds the elastic limit of the wrapping material, since once the value of the predefined degree of stretch is selected to ensure that the wrapping material is not stretched beyond its elastic limit, the system according to the invention by maintaining the value of the degree of stretch with which the wrapping material is being applied to the bale at the selected value of the predefined degree of stretch, there is then no danger of the wrapping material being stretched beyond its elastic limit.

Furthermore, this circumferential wrapping a bale in the bale forming chamber of a baler is carried out without the need for any manual intervention by an operator, which would otherwise be required to adjust the feed speeds of the wrapping material and/or the rotational speed of the bale in the bale forming chamber.

The invention will be more clearly understood from the following description of some preferred embodiments thereof, which are given by way of example only, with reference to the accompanying drawings, in which:
Fig. 1 is a side elevational view of a baler according to the invention which comprises a system also according to the invention for circumferentially wrapping a bale of material formed in the baler with wrapping material, and for controlling the degree of stretch of the wrapping material in the direction of feeding of the wrapping material so that the wrapping material is applied to the circumferential surface of the bale with a predefined degree of stretch, Fig. 2 is a cross-sectional side elevational view of the baler of Fig. 1,
Fig. 3 is a diagrammatic side elevational view of the baler of Fig. 1, with parts of the baler in respective different states to those of Fig. 1,
Fig 4 is a block representation of a portion of the baler of Fig 1,
Fig 5 is a block representation of an electronic control circuit of the baler of Fig. 1,
Fig 6 is a block representation of an hydraulic circuit of a portion of the baler of Fig 1,
Fig. 7 is a graphical representation of the degree of stretch with which wrapping material is being applied to a bale in a bale forming chamber of the baler of Fig. 1, and
Fig. 8 is a view similar to Fig. 2 of a baler according to another embodiment of the invention.

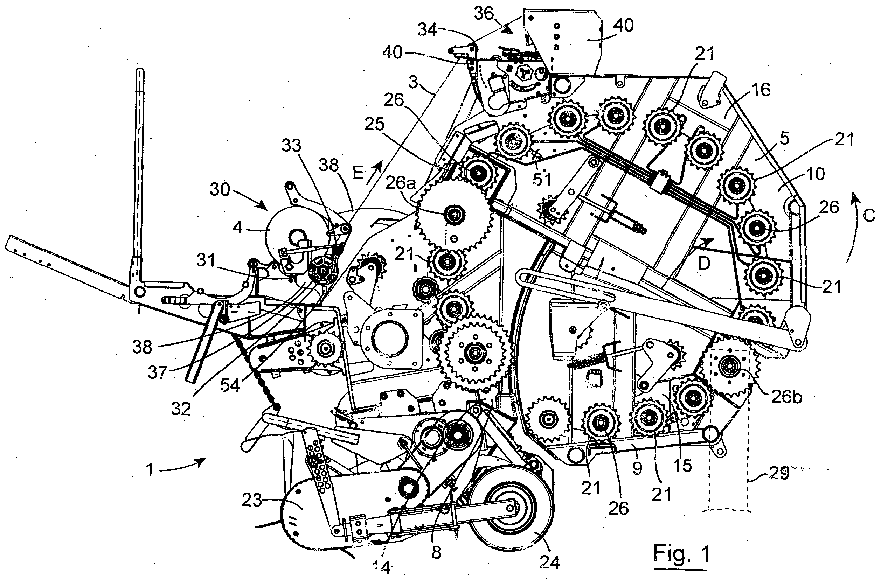

Referring to the drawings, and initially to Figs. 1 to 7, there is illustrated a baler according to the invention, indicated generally by the reference numeral 1, for forming forage material, for example, grass, hay, straw, silage and the like into a cylindrical bale 2 which is circumferentially wrapped with wrapping material, which in this embodiment of the invention comprises a plastics film wrapping material 3. The wrapped bale 2 typically is of diameter of approximately 1.3 metres and of axial length of approximately 1.25 metres, although the wrapped bale may be of diameter in the range of 1 metre to 1.8 metres. The wrapping film 3 is pre-stretched polyethylene film of the type disclosed in PCT Specification No. WO 2011/076694, and is coated on one surface with a light self-adhesive coating. Typically, the wrapping film 3 is supplied in a roll 4, and in this case is of width of approximately 1.4 metres, and of thickness of approximately 20 microns. However, depending on the dimensions of the bale, the width of the wrapping film 3 may range from 1.2 metres to 1.6 metres. Additionally, the thickness of the wrapping film 3 may be any suitable thickness, and typically, may be of thickness in the range of 10 microns to 25 microns. The bale 2 is circumferentially wrapped with the wrapping film 3 as will be described below, with the wrapping film 3 being applied to the bale 2 with a predefined degree of stretch in the feed direction of the wrapping film 3, as will be described below.

The baler 1 in this embodiment of the invention comprises a fixed chamber baler of the type which is described in PCT Published Patent Application Specification No. WO 02/076184. Indeed, the baler may be supplied solely as a baler, or it may be supplied in conjunction with a bale wrapper whereby the baler 1 and the bale wrapper would be mounted on a common chassis. A formed and circumferentially wrapped bale 2 would be discharged from the baler to the bale wrapper for completing the wrapping of the bale. Such a combined baler/bale wrapper is disclosed in PCT Published Patent Application Specification No. WO 02/076183.

The baler 1 comprises a chassis (not shown) which is carried on a pair of ground engaging wheels (also not shown). The baler 1 is adapted to be towed by a tractor or other suitable towing vehicle. The baler 1 comprises a housing 5 formed by three housing segments, namely, a stationary segment 8, a lower moveable segment 9 and an upper moveable segment 10. The three segments 8, 9 and 10 together define a bale forming chamber 12 within which the bale 2 is formed and circumferentially wrapped with wrapping film 3. The stationary segment 8 comprises a pair of opposite spaced apart stationary side walls 14, the lower moveable segment 9 comprises a pair of opposite spaced apart lower side walls 15, while the upper moveable segment 10 comprises a pair of opposite spaced apart upper side walls 16. When the three segments 8, 9 and 10 are defining the bale forming chamber 12, the stationary, lower and upper side walls 14, 15 and 16 together define respective opposite ends of the bale forming chamber 12.

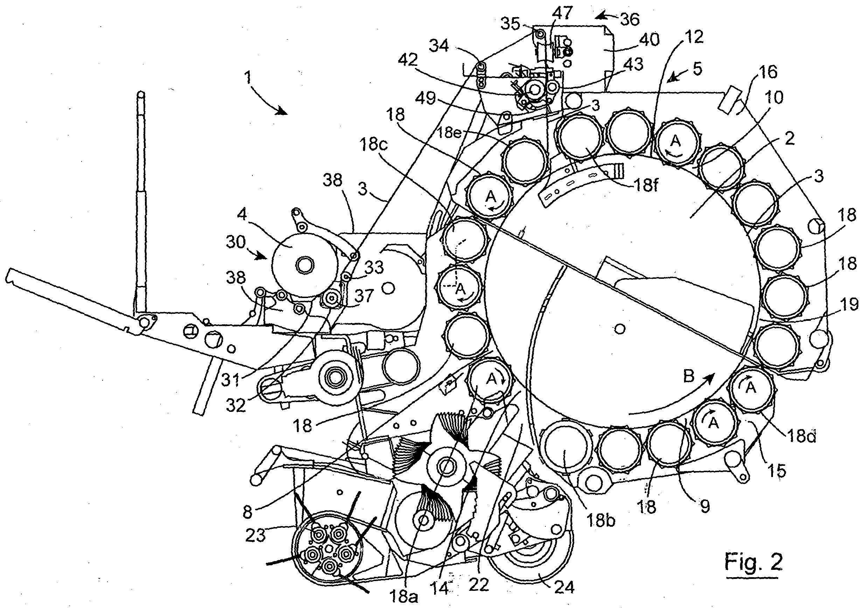

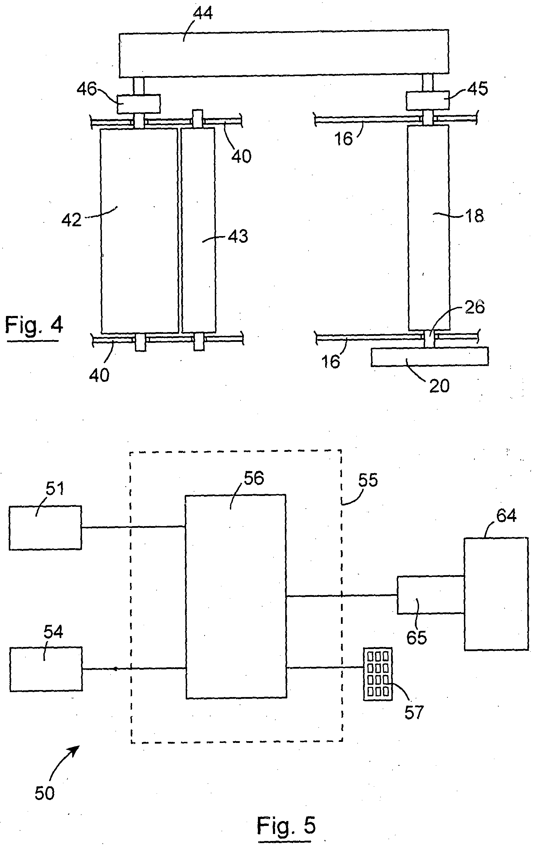

A plurality of circumferentially spaced apart bale rotating rollers 18 extend between and are rotatably carried in the opposite side walls 14, 15 and 16 of the three segments 8, 9 and 10, and together the bale rotating rollers 18 define the circumferential periphery 19 of the bale forming chamber 12. The bale rotating rollers 18 are driven through a chain and sprocket drive transmission 20, sprockets 21 of which are illustrated in Fig. 1. The sprockets 21 of the chain and sprocket drive transmission 20 are fixedly coupled to shafts 26 on which the bale rotating rollers 18 are mounted. A part only of the chain and sprocket drive transmission 20 is illustrated in block representation in Fig. 4. The bale rotating rollers 18 are rotated by the chain and sprocket drive transmission 20 in the direction of the arrows A for rotating the bale 2 being formed in the bale forming chamber 12 in the direction of the arrow B, as illustrated in Fig. 2.

A gap between one of the bale rotating rollers 18a of the stationary segment 8 and one of the bale rotating rollers 18b of the lower moveable segment 9 forms an inlet 22, which accommodates the forage material from a pick-up mechanism 23 into the bale forming chamber 12. The pick-up mechanism 23 is carried on a pair of ground engaging wheels 24, one of which is illustrated in Figs. 1 and 2, and picks up the forage material from a windrow in a field as the baler 1 is being towed behind a tractor.

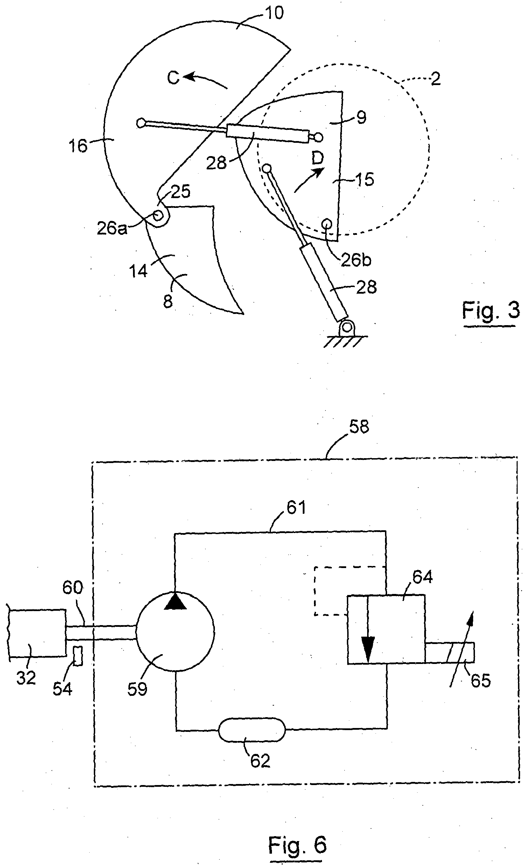

A pair of spaced apart mounting brackets 25 extending downwardly from the respective upper side walls 16 of the upper moveable segment 10 rotatably engage the shaft 26a extending at opposite ends of the bale rotating roller 18c of the stationary segment 10. The upper moveable segment 10 is pivotally carried on the shaft 26a of the bale rotating roller 18c for facilitating pivoting of the upper moveable segment 10 about the shaft 26a in the direction of the arrow C from a bale forming state illustrated in Figs. 1 and 2 with the upper moveable segment 10 co-operating with the segments 8 and 9 to define the bale forming chamber 12 to an upper open state illustrated in Fig. 3 to accommodate a formed circumferentially wrapped bale 2 from the bale forming chamber 12.

A pair of opposite spaced apart upstanding members 29 which extend upwardly from the chassis (not shown) rotatably carry the shaft 26b extending at respective opposite ends of the bale rotating roller 18d of the lower moveable segment 9. Only one of the upstanding members 29 is illustrated in broken lines in Fig. 1. The lower moveable segment 9 is pivotal on the shaft 26b in the direction of the arrow D from a bale forming state illustrated in Figs. 1 and 2 co-operating with the segments 8 and 10 to define the bale forming chamber 12, to a tipped state illustrated in Fig. 3 for discharging a bale 2 from the bale forming chamber 12. The shaft 26b of the bale rotating roller 18d is rotatable in the lower side walls 15 of the lower moveable segment 9 to facilitate pivoting of the lower moveable segment 9 between the bale forming state and the tipped state. Hydraulic rams 28 illustrated in Fig. 3 are provided for pivoting the upper moveable segment 10 between the bale forming state and the upper open state, and for pivoting the lower moveable segment 9 between the bale forming state and the tipped state. The construction and operation of the stationary segment 8, the lower moveable segment 9 and the upper moveable segment 10 are described in the description of the baler of PCT Published Application Specification No. WO 02/076184.

A dispensing means, in this embodiment of the invention a wrapping material dispenser 30 dispenses the wrapping film 3 from the roll 4 for circumferentially wrapping the bale 2 in the bale forming chamber 12. The dispenser 30 comprises a cradle 31 on which the roll 4 of the wrapping film 3 is freely rotatably supported. The wrapping film 3 being of width 1400mm, is of width slightly greater than the axial length of the bale 2, so that opposite longitudinally extending side edges of the wrapping film 3 extend around the peripheral end edges of the bale 2 from the circumferential surface onto the respective opposite radial end surfaces adjacent the peripheral end edges of the bale 2.

The wrapping film 3 is drawn from the roll 4 about a tensioning means, namely, around a tensioning roller 32 and is passed over first, second and third guide rollers 33, 34 and 35 to a delivery mechanism 36 mounted on and above the upper moveable segment 10. The tensioning roller 32 is rotatably carried in bearings 37 which are located in opposite support walls 38 which extend from the corresponding ones of the stationary side walls 14 of the stationary segment 8. The tensioning roller 32 induces tension in the wrapping film 3 between the tensioning roller 32 and the rotating bale 2, which results in the wrapping film 3 being applied to the bale 2 with a degree of stretch in the feed direction, namely, in the feed direction of the arrow E of the wrapping film. The tension induced in the wrapping film 3 by the tensioning roller 32 is variable, as will be described below, so that the wrapping film 3 is applied to the bale 2 with the predefined degree of stretch in the feed direction E, as will also be described below. The first guide roller 33 is rotatably carried in bearings (not shown) in the respective support walls 38 and the second and third guide rollers 34 and 35 are rotatably carried in bearings (not shown) in side walls 40 of the delivery mechanism 36. The side walls 40 of the delivery mechanism 36 extend upwardly from the upper side walls 16 of the upper moveable segment 10.

The delivery mechanism 36 comprises a feed roller 42 and a pinch roller 43 rotatable in the side walls 40 of the delivery mechanism 36, and co-operating with each other for accommodating the wrapping film 3 therebetween, and for initially feeding the wrapping film 3 into the bale forming chamber 12 between a pair of adjacent bale rotating rollers 18, namely, the bale rotating rollers 18e and 18f. The feed roller 42 is driven through a V-belt drive transmission 44 from the chain and sprocket drive transmission 20 which drives the bale rotating rollers 18. An electrically controllable clutch 45 selectively couples the V-belt drive transmission 44 to the chain and sprocket drive transmission 20. A mechanical one-way clutch 46 transmits drive from the V-belt drive transmission 44 to the feed roller 42. The mechanical one-way clutch 46 is configured so that drive is transmitted to the feed roller 42 from the V-belt drive transmission 44 and so that the feed roller 42 can freely rotate when the wrapping film 3 is being drawn into the bale forming chamber 12 between the feed and pinch rollers 42 and 43 under the action of the rotating bale 2 and the bale rotating rollers 18 as will be described below. The V-belt drive transmission 44, the electrically controllable clutch 45 and the mechanical one-way clutch 46 are illustrated coupling the chain and sprocket drive 20 to the feed roller 42 in block representation in Fig. 4.

When the bale 2 in the bale forming chamber 12 is ready to be circumferentially wrapped, drive is selectively applied to the feed roller 42 through the electrically controllable clutch 45, the V-belt drive transmission 44 and the mechanical one-way clutch 46 for feeding the wrapping film 3 into the bale forming chamber 12 between the bale rotating rollers 18e and 18f. Once the wrapping film 3 has been engaged between the rotating bale 2 and the bale rotating roller 18e, the wrapping film 3 is drawn into the bale forming chamber 12 around the circumferential surface of the rotating bale 2 due to the clamping action between the bale rotating rollers 18 and the circumferential surface of the rotating bale 2. The mechanical one-way clutch 46 permits the feed roller 42 to freewheel so that the wrapping film 3 can be freely drawn between the feed and pinch rollers 42 and 43 as the wrapping film 3 is being drawn into the bale forming chamber 12 around the circumferential surface of the bale 2 by the clamping action between the bale rotating rollers 18 and the rotating bale 2 with minimal resistance from the feed and pinch rollers 42 and 43.

The electrically controllable clutch 45 is operated to disengage the V-belt transmission 44 from the chain and sprocket drive transmission 20 once the wrapping film is being drawn into the bale forming chamber 12 onto the circumferential surface of the bale 2 by the clamping action between the bale rotating rollers 18 and the rotating bale 2.

A pair of spaced apart rotatably mounted centring rollers 47 are located at respective opposite sides of the delivery mechanism 36 for engaging the corresponding ones of the opposite longitudinally extending side edges of the wrapping film 3 for centring the wrapping film 3 relative to the bale forming chamber 12. Additionally, the centring rollers 47 are urgeable towards each other for urging the side edges of the wrapping film 3 towards each other, to in turn form the wrapping film 3 into a rope-like configuration for facilitating severing of the wrapping film 3 which has been circumferentially wrapped onto the bale 2 from the wrapping film 3 being fed through the delivery mechanism 36. At the end of wrapping of each bale 2 with the wrapping film 3, the centring rollers 47 are urged together for forming the wrapping film 3 into the rope-like configuration.

A cutting mechanism 49 of a type which will be well known to those skilled in the art is located between the feed and pinch rollers 42 and 43 of the delivery mechanism 36 and the bale rotating rollers 18e and 18f for severing the wrapping film 3, which has been wrapped onto the circumferential surface of the bale 2, on completion of wrapping of the bale 2, from the wrapping film 3 in the delivery mechanism 36 when the wrapping film 3 has been formed by the centring rollers 47 into the rope-like configuration.

A system also according to the invention, and indicated generally by the reference numeral 50 is provided for controlling the circumferential wrapping of the bale 2 in the bale forming chamber 12 with the wrapping film 3 so that the wrapping film 3 is applied to the circumferential surface of the bale 2 with the predefined degree of the stretch in the feed direction of the wrapping film 3, and for maintaining the degree of stretch of the wrapping film 3 in the feed direction with which the wrapping film 3 is being applied to the bale 2 substantially constant at the predefined degree of stretch during wrapping of the bale 2.

The system 50 comprises a first monitoring means comprising a first rotary encoder 51 for monitoring a characteristic indicative of the linear speed of the wrapping film 3 at a first location, which is adjacent the bale 2. In this embodiment of the invention the first rotary encoder 51 is operably associated with the bale rotating roller 18e for monitoring the rotational speed of the bale rotating roller 18e. Since the linear speed of the circumferential surface of the bale rotating roller 18e is similar to the liner speed of the circumferential surface of the rotating bale 2, and since the linear speed of the circumferential surface of the bale 2 is similar to the linear speed of the wrapping film 3 as it is being circumferentially wrapped onto the rotating bale, the rotational speed of the bale rotating roller 18e is indicative of the linear speed of the wrapping film adjacent the bale, and thus, the linear speed of the wrapping film 3 at the first location adjacent the bale 2 can be readily determined from the monitored rotational speed of the bale rotating roller 18e.

A second monitoring means of the system 50 comprises a second rotary encoder 54 for monitoring a characteristic indicative of the linear speed of the wrapping film at a second location before tensioning thereof by the tensioning roller 32, in this case the second location is adjacent the tensioning roller 32. The second rotary encoder 54 is associated with the tensioning roller 32 for monitoring the rotational speed of the tensioning roller 32. The wrapping film 3 passes around the tensioning roller 32 without slip, and accordingly, the linear speed of the circumferential surface of the tensioning roller 32 is similar to the linear speed of the wrapping film 3 adjacent the tensioning roller 32 before any tension is induced in the wrapping film 3. Therefore, the linear speed of the wrapping film 3 adjacent the tensioning roller 32 can be readily determined from the rotational speed of the tensioning roller 32 which is monitored by the second rotary encoder 54, and is thus indicative of the linear speed of the wrapping film 3 adjacent the tensioning roller 32. The first and second rotary encoders may be either optical encoders or magnetic encoders. Such rotary encoders will be well known to those skilled in the art.

An electronic control circuit 55 operating under the control of a signal processor, in this embodiment of the invention a microprocessor 56 which controls the general operation of the baler 1, also controls the operation of the system 50. The microprocessor 56 in accordance with the invention is programmed to control the feeding of the wrapping film 3 from the roll 4 into the bale forming chamber 12 onto the circumferential surface of the bale 2, so that the wrapping film 3 is applied to the bale 2 with the constant predefined degree of stretch in the feed direction of the wrapping film 3. The value of the predefined degree of stretch, which is selectable, is stored in memory in the microprocessor 56, or may be stored in a suitable random access memory accessible to the microprocessor 56. An interface means, namely, a keypad 57 mounted on the housing 5 of the baler 1 is provided for inputting a selected value of the predefined degree of stretch to the memory in the microprocessor 56. The keypad 57 is illustrated in Fig. 5.

The microprocessor 56 is programmed to read signals from the first and second rotary encoders 51 and 54, and once the wrapping film 3 is being drawn onto the circumferential surface of the bale 2 between the bale 2 and the bale rotating roller 18e, the microprocessor 56 from the signals read from the first and second rotary encoders 51 and 54 computes the respective linear speeds of the wrapping film 3 adjacent the tensioning roller 32, and adjacent the circumferential surface of the bale 2. The microprocessor 56 is programmed to compute the value of degree of stretch induced in the wrapping film 3 in the feed direction by computing the value of the ratio of the difference of the linear speeds of the wrapping film 3 in the feed direction adjacent the bale 2 and the tensioning roller 32 to the linear speed of the wrapping film 3 in the feed direction adjacent the tensioning roller 32. Accordingly, the microprocessor 56 is programmed to subtract the linear speed of the wrapping film 3 adjacent the tensioning roller 32 from the linear speed of the wrapping film 3 adjacent the rotating bale 2, and to divide the resulting difference by the linear speed of the wrapping film 3 adjacent the tensioning roller 32. The value of the degree of stretch in the feed direction in the wrapping film 3 as the wrapping film 3 is being applied to the circumferential surface of the bale 2 is equal to the value of the ratio of the difference of the linear speeds of the wrapping film 3 in the feed direction adjacent the bale 2 and the tensioning roller 32 to the linear speed of the wrapping film 3 in the feed direction adjacent the tensioning roller 32.

The microprocessor 56 is programmed to compare the computed value of degree of stretch with which the wrapping film 3 in the feed direction is being applied to the rotating bale 2 in the bale forming chamber 12, with the stored value of the predefined degree of stretch in the feed direction in the wrapping film. If the computed value of the degree of stretch in the feed direction in the wrapping film 3 with which the wrapping film 3 is being applied to the circumferential surface of the bale 2 is not equal to the stored value of the predefined degree of stretch in the feed direction, the microprocessor 56 is programmed to alter the rotational speed of the tensioning roller 32, to in turn alter the linear speed of the wrapping film 3 adjacent the tensioning roller 32 until the computed value of the degree of stretch in the wrapping film 3 in the feed direction with which the wrapping film 3 is being applied to the rotating bale 2 in the bale forming chamber 12 is equal to the stored value of the predefined degree of stretch in the feed direction, as will now be described.

A tensioning control means for controlling the tension induced in the wrapping film 3 in the feed direction by the tensioning roller 32 comprises a torque control means, namely, a torque controller, which is indicated generally by the reference numeral 58, for applying a torsional load to the tensioning roller 32, against which the tensioning roller 32 rotates, and for controlling the value of the torsional load applied to the tensioning roller 32, for in turn controlling the rotational speed of the tensioning roller 32. The torque controller 58 comprises a rotary hydraulic torque control pump 59 which is coupled to the tensioning roller 32 through a fixed drive transmission 60 for applying the torsional load to the tensioning roller 32. The torque control pump 59 is located in an hydraulic circuit 61, and is configured to pump hydraulic fluid from a hydraulic fluid reservoir 62 through the hydraulic circuit 61, which is in turn returned to the reservoir 62.

A control means for controlling the torsional load applied to the tensioning roller 32 comprises a pressure control means, namely, a solenoid operated proportional pressure relief valve 64 for controlling the pressure in the hydraulic fluid against which the torque control pump 59 must pump the hydraulic fluid. The solenoid operated proportional pressure relief valve 64 is located in the hydraulic circuit 61 downstream of the torque control pump 59 between the torque control pump 59 and reservoir 62, so that hydraulic fluid is returned from the proportional pressure relief valve 64 to the reservoir 62. A solenoid 65 controls the proportional pressure relief valve 64, and in turn the pressure induced in the hydraulic fluid against which the torque control pump 59 must operate. The solenoid 65 is controlled by a pulse width modulated electrical current which is applied to a solenoid 65 under the control of the microprocessor 56 in response to the difference between the computed value of the degree of stretch in the wrapping film 3 in the feed direction and the stored value of the predefined degree of stretch in the feed direction of the wrapping film.

By modulating the pulse width of the current applied to the solenoid 65 of the proportional pressure relief valve 64, the pressure against which the torque control pump 59 must pump the hydraulic fluid in the hydraulic circuit 61 is varied. In this embodiment of the invention the pressure induced in the hydraulic fluid by the proportional pressure relief valve 64 is proportional to the pulse width of the electrical current applied to the solenoid 65.

By controlling the pressure in the hydraulic fluid against which the torque control pump 59 must pump by the proportional pressure relief valve 64, the torsional load applied by the torque control pump 59 to the tensioning roller 32 against which the tensioning roller 32 must rotate is likewise controlled. By controlling the torsional load applied by the torque control pump 59 to the tensioning roller 32, the rotational speed of the tensioning roller 32 is likewise controlled.

Accordingly, by increasing the torsional load applied by the torque control pump 59 to the tensioning roller 32, the rotational speed of the tensioning roller 32 is reduced relative to the rotational speed of the rotating bale 2 in the bale forming chamber 12, and therefore the degree of stretch induced in the wrapping film 3 in the feed direction at which the wrapping film 3 is being applied to the circumferential surface of the bale 2 is increased. Conversely, by reducing the torsional load applied by the torque control pump 59 to the tensioning roller 32, the rotational speed of the tensioning roller 32 relative to the rotational speed of the rotating bale 2 in the bale forming chamber 12 is increased, thus reducing the degree of stretch induced in the wrapping film 3 in the feed direction being applied to the bale 2.

In the event that the computed value of the degree of stretch with which the wrapping film 3 is being applied to the rotating bale 2 in the bale forming chamber 12 is greater than the stored value of the predefined degree of stretch, the pulse width of the electrical current applied to the solenoid 65 under the control of the microprocessor 56 is reduced to, in turn, reduce the torsional load applied by the torque control pump 59 to the tensioning roller 32, to thereby increase the rotational speed of the tensioning roller 32 relative to the rotational speed of the bale 2 in the bale forming chamber 12. The microprocessor 56 is programmed to continue to reduce the pulse width of the electrical current applied to the solenoid 65 of the proportional pressure relief valve 64 until the computed value of the degree of stretch in the wrapping film 3 in the feed direction is equal to the stored value of the predefined degree of stretch.

Conversely, if the computed value of the degree of stretch induced in the wrapping film in the feed direction being applied to the rotating bale 2 in the bale forming chamber 12 is less than the stored value of the predefined degree of stretch, the microprocessor 56 continues to increase the pulse width of the electrical current applied to the solenoid 65 of the proportional pressure relief valve 64 until the computed value of the degree of stretch induced in the wrapping film in the feed direction applied to the rotating bale 2 in the bale forming chamber 12 is equal to the stored value of the predefined degree of stretch.

Additionally, in order to facilitate initial feeding of the wrapping film 3 by the feed and pinch rollers 42 and 43 into the bale forming chamber 12, the microprocessor 56 maintains the pulse width of the electrical current applied to the solenoid 65 of the proportional pressure relief valve 64 at a relatively low level, so that the torsional load applied by the torque control pump 59 to the tensioning roller 32 is minimal, and is just sufficient to maintain the wrapping film 3 taut between the tensioning roller 32 and the feed and pinch rollers 42 and 43. The microprocessor 56 is programmed to read signals from the first and second rotary encoders 51 and 54 while the wrapping film 3 is being fed into the bale forming chamber 12 by the feed and pinch rollers 42 and 43.

On the signal from the first rotary encoder 51 being indicative of a significant increase in the linear speed of the wrapping film 3 adjacent the bale 2, which results from the wrapping film being drawn into the bale forming chamber 12 by the clamping action between the bale rotating roller 18e and the rotating bale 2, the microprocessor 56 immediately increases the pulse width of the electrical current being applied to the solenoid 65 of the proportional pressure relief valve 64 in order to increase the torsional load applied by the torque control pump 59 to the tensioning roller 32 to in turn reduce the rotational speed of the tensioning roller 32, the rotational speed of which will have increased once the linear speed of the wrapping film 3 increases as a result of being drawn into the bale forming chamber 12 by the clamping action of the bale rotating roller 18e and the rotating bale 2 in the bale forming chamber 12 on the wrapping film. Thereafter, the rotational speed of the tensioning roller 32 is controlled so that the wrapping film 3 is applied to the rotating bale 2 with the computed value of the degree of stretch equal to the stored value of the predefined degree of stretch, and in order that the degree of stretch with which the wrapping film 3 is being applied to the rotating bale 2 in the bale forming chamber 12 is maintained substantially constant at the predefined degree of stretch, as already described. The rotational speed at which the bale 2 is being rotated in the bale forming chamber 12 is such that the linear speed with which the wrapping film 3 is drawn into the bale forming chamber 12 by the clamping action between the bale rotating rollers 18 and the rotating bale 2 on the wrapping film is significantly greater than the linear speed with which the wrapping film 3 is fed into the bale forming chamber 12 by the feed and pinch rollers 42 and 43.

On completion of wrapping of the bale 2 with the wrapping film 3, the microprocessor 56 is programmed to reduce the pulse width of the electrical current applied to the solenoid 65 of the proportional pressure relief valve 64 so that the torsional load applied by the torque control pump 59 to the tensioning roller 32 is reduced to a minimal value, in order to allow the centring rollers 47 to urge the longitudinally extending side edges of the wrapping film 3 towards each other, in order to form the wrapping film 3 into a rope-like configuration, to in turn facilitate severing of the wrapping film 3 which has been wrapped onto the bale 2 by the cutting mechanism 49 from the remaining wrapping film 3 extending from the roll 4 thereof.

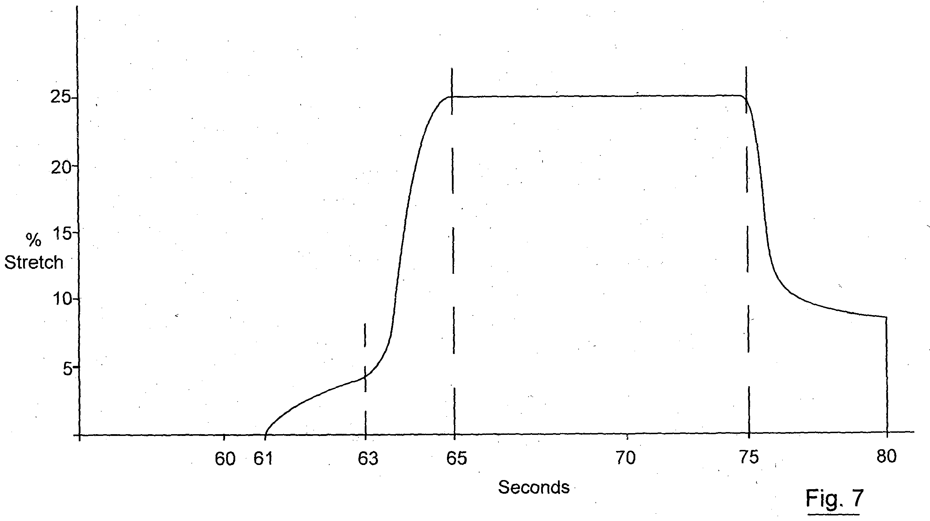

Referring now to Fig. 7, there is illustrated a graph of the value of the degree of stretch with which the wrapping film 3 is being applied to the rotating bale 2 in the bale forming chamber 12 of the baler 1, which is plotted against time. The value of the degree of stretch in the wrapping film 3 is plotted on the vertical Y-axis as a percentage of the unit length of the wrapping film 3 as it is drawn from the roll 4 without any stretch being induced in the wrapping film 3 by the tensioning roller 32. In order to arrive at the percentage stretch value, the degree of stretch which is computed by the microprocessor 56 as the ratio of the difference of the linear speeds of the wrapping film 3 adjacent the bale 2 and the tensioning roller 32 to the linear speed of the wrapping film 3 adjacent the tensioning roller 2 is multiplied by one hundred. The time in seconds is plotted on the horizontal X-axis. The time to form a bale in the bale forming chamber 12 of the baler 1 is approximately 60 seconds.

At time 61 seconds the feed roller 42 of the feed and pinch rollers 42 and 43 is powered up under the control of the microprocessor 56 to feed the wrapping film 3 into the bale forming chamber 12. The time required to feed the wrapping film 3 by the feed and pinch rollers 42 and 43 into the bale forming chamber is approximately two seconds. At time 63 seconds the wrapping film 3 is engaged and clamped between the bale rotating roller 18e and the rotating bale 2. During this two-second period from time 61 seconds to time 63 seconds until the wrapping film has been engaged and clamped between the bale rotating roller 18e and the rotating bale 2, the torsional load applied to the tensioning roller 32 is maintained at a relatively minimal value, which results in the value of the degree of stretch with which the wrapping film 3 is being stretched to being not more than 0.05, or 5%.

At time 63 seconds the microprocessor 56 commences to increase the pulse width of the electrical current applied to the solenoid 65 of the proportional pressure relief valve 64 in order to increase the torsional load applied to the tensioning roller 32 to in turn reduce the rotational speed of the tensioning roller 32. The pulse width of the electrical current applied to the solenoid 65 of the proportional pressure relief valve 64 is continuously increased during the period from time 63 seconds to time 65 seconds, at which time the value of the degree of stretch with which the wrapping film 3 is being applied to the bale 2 in the bale forming chamber 12 is equal to the value of the predefined degree of stretch, which in this embodiment of the invention is selected to be 0.25, or 25%. During the period from time 65 seconds to time 75 seconds, the microcontroller 56 continues to control the electrical current being applied to the solenoid 65 of the proportional pressure relief valve 64 in order to maintain the value of the degree of stretch with which the wrapping film 3 is being applied to the rotating bale 2 in the bale forming chamber 12 constant at the value of the predefined degree of stretch of 0.25 or 25%.

At time 75 seconds, wrapping of the bale 2 with the wrapping film 3 has been completed, and the bale 2 has been wrapped with approximately four turns of the wrapping film. At that stage the pulse width of the electrical current being applied under the control of the microprocessor 56 to the solenoid 65 of the proportional pressure relief valve 64 is rapidly reduced to a relatively low minimal value which results in the value of the degree of stretch in the wrapping film 3 being reduced to below 0.10 or 10%. During the time period 75 seconds to 80 seconds, the centring rollers 45 are urged towards each other to configure the wrapping film into a rope-like configuration to facilitate severing of the wrapping film 3 which has been wrapped onto the bale 2 from the remainder of the wrapping film 3 at time 80 seconds.

In use, as the baler 1 is being towed by the tractor or other suitable towing vehicle, hay, straw, grass or the like which has been cut and formed into a windrow is picked up from a field by the pickup mechanism 23, and delivered into the bale forming chamber 12 through the inlet 22, where it is rotated in the bale forming chamber 12 by the bale rotating rollers 18 to form a bale 2. When the bale 2 has been formed to the desired diameter, the bale 2 is ready for circumferential wrapping in the bale forming chamber 12. The electrically controlled clutch 45 under the control of the microprocessor 56 engages the V-belt transmission 44 with the chain and sprocket drive transmission 20 of the bale rotating rollers 18 to drive the feed roller 42, to in turn feed the wrapping film 3 into the bale forming chamber 12 between the bale rotating rollers 18e and 18f. During the initial feeding of the wrapping film 3 by the feed and pinch rollers 42 and 43 the proportional pressure relief valve 64 is operated under the control of the microprocessor 56 so that the torsional load applied to the tensioning roller 32 is minimal to facilitate feeding of the wrapping film 3 between the feed and pinch rollers 42 and 43 into the bale forming chamber 12.

The microprocessor 56 continues to read the signal from the first and second rotary encoders 51 and 54, and on determining that the wrapping film 3 is engaged between the circumferential surface of the bale 2 and the bale rotating roller 18e, and is thus being drawn into the bale forming chamber 12 by the clamping action between the bale rotating rollers 18 and the rotating bale 2, the microprocessor 56 operates the electrically controlled clutch 45 to disengage the V-belt transmission 44 from the chain and sprocket drive transmission 20 of the bale rotating rollers 18, and increases the pulse width of the electrical current applied to the solenoid 65 of the proportional pressure relief valve 64 to increase the torsional load applied to the tensioning roller 32 until the computed value of the degree of stretch in the feed direction in the wrapping film 3 being applied to the bale 2 in the bale forming chamber 12 reaches the stored value of the predefined degree of stretch stored in memory in the microprocessor 56.

The microprocessor 56 continues to read signals from the first and second rotary encoders 51 and 54, and where appropriate controls operation of the proportional pressure relief valve 64 for varying the torsional load applied to the tensioning roller 32 to maintain the value of the degree of stretch in the feed direction of the wrapping film 3 being applied to the bale 2 in the bale forming chamber 12 at the stored value of the predefined degree of stretch stored in memory in the microprocessor 56.

The wrapping of the rotating bale 2 in the bale forming chamber 12 with the wrapping film 3 continues with the wrapping film 3 being applied to the circumferential surface of the rotating bale 2 with the degree of stretch in the feed direction of the wrapping film 3 being maintained substantially constant at the predefined degree of stretch until the bale 2 has been wrapped with the desired number of turns of the wrapping film 3. Typically, the number of turns of the wrapping film 3 with which the bale 2 is wrapped is in the order of four turns of the wrapping film 3, although the number of turns of the wrapping film 3 with which the bale 2 is wrapped in the bale forming chamber can vary between three and eight turns of the wrapping film 3.

Once circumferential wrapping of the bale 2 in the bale forming chamber 12 has been completed, the centring rollers 47 are urged towards each other to form the wrapping film 3 into a rope-like configuration in order to facilitate severing of the wrapping film 3 which has been wrapped onto the bale 2 from the wrapping film 3 being fed from the roll 4. Simultaneously as the centring rollers 47 are being urged towards each other to form the wrapping film 3 into a rope-like configuration, the microprocessor 56 reduces the pulse width of the electrical current applied to the solenoid 65 of the proportional pressure relief valve 64 in order that the torsional load being applied to the tensioning roller 32 is minimal to facilitate forming the wrapping film 3 into the rope-like configuration. The cutting mechanism 49 is then operated under the control of the microprocessor 56 to cut through the rope-like configuration of the wrapping film 3 in order to sever the wrapping film 3 which has been wrapped onto the bale 2 in the bale forming chamber 12 from the remainder of the wrapping film 3.

On the wrapping film 3 having been severed, the circumferentially wrapped bale 2 is discharged from the bale forming chamber 3 by operating the hydraulically powered rams 28 for pivoting the upper moveable segment 10 of the housing 5 of the baler 1 in the direction of the arrow C from the bale forming state to the open state, and for pivoting the lower moveable segment 9 in the direction of the arrow D from the bale forming state to the tipped state. On discharge of the bale 2 from the bale forming chamber 12, the lower moveable segment 9 is returned to the bale forming state, and the upper moveable segment 10 is similarly returned to the bale forming state by the hydraulic rams 28. The baler 1 is then ready to form the next bale.

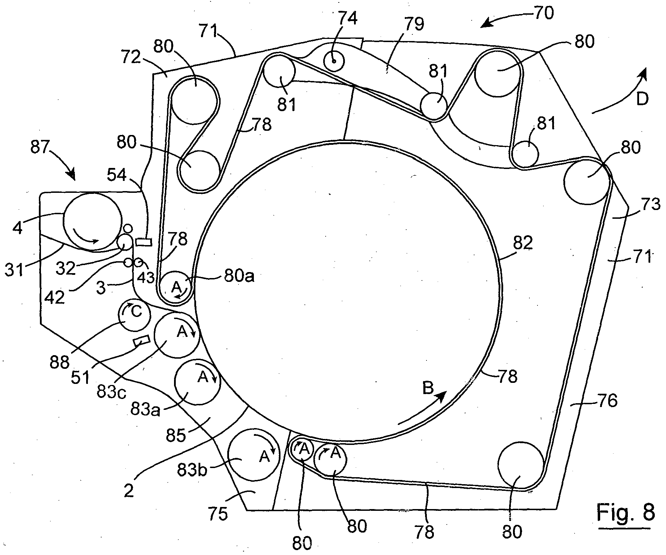

Referring now to Fig. 8, there is illustrated a portion of baler according to another embodiment of the invention, indicated generally by the reference numeral 70, for forming a cylindrical bale of hay, straw, silage and the like, and for circumferentially wrapping the formed bale 2. In this embodiment of the invention the baler 70 is a belt baler of the type described in PCT published Patent Application No. WO 2011/033494, and comprises a housing 71 formed by a forward segment 72 and a rearward segment 73. The rearward segment 73 is pivotally coupled to the front segment 72 about a horizontally extending upper pivot axis 74, and is pivotal in the direction of the arrow D from a bale forming state illustrated in Fig. 8 to an upwardly open state (not shown) for discharging a formed and circumferentially wrapped bale 2 therefrom. The forward segment 72 comprises a pair of spaced apart forward side walls 75, while the rearward segment 73 comprises a pair of opposite spaced apart rearward side walls 76. A plurality of side by side bale rotating belts 78, only one of which is illustrated, are located between the forward and rearward side walls 75 and 76 of the forward and rearward segments 72 and 73, and are passed around carrier rollers 80, and define a part of a bale forming chamber 82. The carrier rollers 80 extend between the side walls 75 and 76 and are rotatable in bearings (not shown) in the side walls 75 and 76. A tensioning arm 79 rotatably carries rollers 81 for tensioning the bale rotating belts 78. The tensioning arm 79 is pivotal about the upper pivot axis 74. The bale forming chamber 82 as well as being formed by the bale rotating belts 78 is also formed by three bale rotating rollers 83 which are rotatably carried in and extend between the forward side walls 75.

The bale rotating belts 78 and the bale rotating rollers 83, as will be well understood by those skilled in the art, define the bale forming chamber 82 within which the cylindrical bale 2 is formed when the rearward segment 73 is in the bale forming state. The carrier rollers 80 are driven in the direction of the arrows A for driving the bale rotating belts 78 in the direction of the arrow B for in turn rotating the bale 2 in the bale forming chamber 82 in the direction of the arrow B. The bale rotating rollers 83 are driven in the direction of the arrow A for likewise rotating the bale 2 in the bale forming chamber 82 in the direction of the arrow B. The bale forming chamber 82 increases in diameter as the bale 2 being formed therein likewise increases in diameter. The increase in the diameter of the bale forming chamber 82 is accommodated by the rollers 81.

A pick-up mechanism (not shown) similar to the pick-up mechanism 23 of the baler 1 picks up the hay, straw, grass or the like material to be baled, and delivers the material into the bale forming chamber 82 through an inlet 85 formed between the bale rotating rollers 83a and 83b.

A wrapping material dispensing means comprising a wrapping material dispenser 87 which is substantially similar to the wrapping material dispenser 30 of the baler 1 is mounted on the forward segment 72 of the baler 70. The wrapping material dispenser 87 is substantially similar to the wrapping material dispenser 30 of the baler 1, and similar components are identified by the same reference numerals. The wrapping material dispenser 87 comprises a tensioning roller 32, and a torsional load is applied to the tensioning roller 32 by a torque controller which is similar to the torque controller 58 of the system 50 of the baler 1. Plastics wrapping film, which is similar to the wrapping film 3 is dispensed by the dispenser 87 from a roll 4 into the bale forming chamber 82 for circumferentially wrapping a formed bale 2 in the bale forming chamber 82.

The wrapping film 3 is fed from the tensioning roller 32 of the wrapping material dispenser 87 through a feed and pinch roller 42 and 43 and in turn is deflected into the bale forming chamber by a deflecting roller 88 which is rotated in the direction of the arrow C between the bale rotating roller 83c and the bale rotating belts 78 as they pass around the carrier roller 80a. Once the wrapping film 3 engages the bale rotating roller 83c, the wrapping film 3 is urged by the rotating action of the bale rotating roller 83c into the bale forming chamber 82, and is in turn clamped between the circumferential surface of the rotating bale 2 and the bale rotating roller 83c, and is drawn into the bale forming chamber 82 and wrapped circumferentially around the rotating bale 2 by the clamping action between the rotating bale 2 and the bale rotating roller 83 and the bale rotating belt 78.

The system according to this embodiment of the invention for controlling circumferential wrapping of the bale 2 in the bale forming chamber 82 so that the wrapping film 3 is applied to the rotating bale 2 at a predefined degree of stretch in the feed direction of the wrapping film 3 is similar to the system 50 described with reference to the baler 1. The first rotary encoder 51 of the system 50 in this embodiment of the invention is associated with the bale rotating roller 83c for monitoring the rotational speed of the bale rotating roller 83c from which the linear speed of the wrapping film 3 adjacent the bale can be computed. The second rotary encoder 54 monitors the rotational speed of the tensioning roller 32 as already described with reference to the baler 1.

A microprocessor which is similar to the microprocessor 56 of the baler 1 and which controls the operation of the baler 70 reads signals from the first and second rotary encoders 51 and 54 and computes the linear speeds of the wrapping film 3 in the feed direction adjacent the rotating bale 2 and adjacent the tensioning roller 32. The microprocessor of the baler 70 is programmed to compute the ratio of the difference of the linear speeds of the wrapping film 3 adjacent the rotating bale 2 and the tensioning roller 32 to the linear speed of the wrapping film 3 adjacent the tensioning roller 32. This ratio gives the value of the degree of stretch with which the wrapping film 3 is being applied to the rotating bale 2 in the bale forming chamber 82.

The microprocessor of the baler 70 is programmed in a similar manner as the microprocessor 56 of the baler 1 to compare the computed value of the degree of stretch of the wrapping film 3 as it is being applied to the rotating bale 2 in the bale forming chamber 82 with a stored value of the predefined degree of stretch. If the computed value of the degree of stretch with which the wrapping film 3 is being applied to the bale 2 is not equal to the stored value of the predefined degree of stretch, the microprocessor of the baler 70 is programmed to operate the proportional pressure relief valve 64 for altering the torsional load which is applied to the tensioning roller 32 until the value of the degree of stretch with which the wrapping film 3 is being applied to the rotating bale 2 in the bale forming chamber 82 is equal to the stored value of the predefined degree of stretch as already described with reference to the system 50 and the baler 1 described with reference to Figs. 1 to 7.

Otherwise, operation of the baler 70 is substantially similar to the operation of the baler 1, with the exception that on completion of circumferential wrapping of the bale 2 in the bale forming chamber 82, the rearward segment 73 is pivoted in the direction of the arrow D about the pivot axis 74 from the bale forming state to the upward open state (not shown) to allow the circumferentially wrapped bale 2 to drop from the bale forming chamber. This aspect of the baler 70 is described in PCT published Patent Application No. WO 2011/033494.

While the first monitoring means has been described for monitoring the speed of the bale rotating roller 18e of the bale forming chamber 12 of the baler 1, the first monitoring means may be adapted for monitoring the speed of any of the bale rotating rollers 18 in order to determine the circumferential speed of the bale 2. Alternatively, the first monitoring means may be adapted for monitoring the rotational speed of either the feed roller 42 or the pinch roller 43, from which the linear speed of the wrapping film 3 adjacent the rotating bale 2 could be determined, since the wrapping film 3 would be drawn between the feed and pinch rollers 42 and 43 without slip.

Additionally, it is envisaged that the first monitoring means may determine the linear speeds of the wrapping film 3 by any other suitable means, for example, by providing markings on the wrapping film of known spacing in the feed direction, whereby one or more photosensors or other suitable sensors would be provided for monitoring the markings on the wrapping film in order to determine the linear speed of the wrapping film as it is being applied to the bale 2. It will also be appreciated that the second monitoring means could also be adapted to monitor such markings on the wrapping film adjacent the tensioning roller 32 in order to determine the linear speed of the wrapping film as it leaves the tensioning roller 32.

Additionally, it will be appreciated that the first rotary encoder may be adapted to monitor the rotational speed of any of the carrier rollers of the bale rotating belts of the belt baler 70 which carry the bale rotating belts, from which the linear speed of the wrapping film adjacent the bale could be determined. It is envisaged that the first rotary encoder could also be adapted to monitor the rotational speed of any of the bale rotating rollers 83 of the belt baler 70. Additionally, it is envisaged that a belt follower roller could be provided which would be in rotatable engagement with one of the bale rotating belts of the belt baler 70, and the first rotary encoder could monitor the rotational speed of the belt follower, from which the linear speed of the bale rotating belt could then be determined.

It is also envisaged that the system according to the invention may be used in conjunction with any baler for circumferentially wrapping a formed bale of any type of material besides forage material in a bale forming chamber.

While the tensioning means for inducing a torsional load in the tensioning roller 32 has been described as a torque controller, any other suitable tensioning means for inducing a torsional load in the tensioning roller 32 may be provided. Additionally, while the torque controller has been described as comprising a torque control pump and a proportional pressure relief valve which is solenoid controlled, any other suitable torque controller may be used. Indeed, it is envisaged that the torque controller could comprise an electric motor driven by the tensioning roller, and the electric motor would be coupled to a variable electric load. Alternatively, a torque generating clutch could be used or a brake could be provided on the tensioning roller, or the tensioning roller could be coupled to such a brake.

The advantage of providing the torque controller in the form of a torque control hydraulic pump in a hydraulic circuit with a proportional pressure relief valve for controlling the pressure against which the torque control pump must pump is that the proportional pressure relief valve accurately controls the pressure against which the torque control pump must pump regardless of the speed of a power take-off shaft of a tractor which would power the baler and would also operate a pump to pressurise the hydraulic fluid supply, and other external influences. Additionally, the provision of the torque controller in the form of a torque control hydraulic pump and an hydraulic circuit with a proportional pressure relief valve for controlling the pressure of the hydraulic fluid against which the torque control pump must pump provides a particularly compact and robust torque controller in which the torque can be readily easily varied and can be consistently maintained.

While the balers have been described as being a fixed chamber baler and a belt baler, it is envisaged that the baler may comprise any other type of fixed chamber baler or any other type of variable volume bale forming chamber. For example, the baler may be of the type in which the bale forming chamber is wholly or partly formed by a belt system, a chain system or a combination of any of a belt system, a chain system and a system of bale rotating rollers, and in which case, the linear circumferential speed of the bale would typically be determined by determining the linear speed of the belt or belts, chain or chains, or bale rotating roller, as the case may be, which rotate the bale in the bale forming chamber. In which case, the first monitoring means would typically be adapted for monitoring the rotational speed of one of the rollers about which one or more of the belts or chains are carried.

While the baler and the system have been described whereby the bale is circumferentially wrapped with wrapping film of plastics material, it is envisaged that the baler and system may be used in conjunction with any wrapping material whereby a bale in a bale forming chamber of a baler is being circumferentially wrapped with any other type of wrapping material, for example, netting material or the like, whereby it is desired to maintain the degree of stretch of the wrapping material in the feed direction, be it wrapping film, netting or the like substantially constant at a predefined degree of stretch as the wrapping material, be it wrapping film or netting material is being applied to the circumferential surface of the bale.

While the solenoid operated proportional pressure relief valve has been described as being controlled by modulating the pulse width of a pulse width modulated current applied to the solenoid of the proportional pressue relief valve, any other suitable means of controlling the proportional pressure relief valve may be used. For example, a continuous current could be applied to the solenoid, which would be varied by increasing or decreasing the value of the current applied to the solenoid. Alternatively, the voltage of an electrical power supply applied to the solenoid of the proportional pressure relief valve could be varied.

While the computing means has been described as comprising a microprocessor, any other suitable signal processor may be used. Indeed, it is envisaged in certain cases that the signal processor could be a microcontroller or a logic controller. Indeed, in certain cases, a hardware control circuit could also be used as a signal processor.

It is also envisaged that the characteristic indicative of the linear speed of the wrapping material adjacent the bale could be determined as the rotational speed of the bale in the bale forming chamber, and the rotational speed of the bale in the bale forming chamber could be detected by monitoring the speed of a follower roller in rotatable engagement with the circumferential surface of the rotating bale in the bale forming chamber. The rotational speed of such a follower roller could be monitored by a suitable rotary encoder or any other suitable monitoring means.

It is also envisaged that the rotational speeds of the wrapping film adjacent the bale and the tensioning roller may be determined by respective wrapping film follower rollers which would be in rotational engagement with the wrapping film adjacent the bale and the tensioning roller, and the first and second monitoring means would monitor the rotational speeds of the respective wrapping film follower rollers, from which the linear speeds of the wrapping film adjacent the bale and the tensioning roller could then be computed.

Furthermore, it is envisaged that while the second location at which the linear speed of the wrapping film is determined has been described as being adjacent the tensioning roller before the tensioning roller applies tension to the wrapping film, it is envisaged that the linear speed of the wrapping film could be determined at any other suitable second location before the tensioning roller, for example, the linear speed of the wrapping film may be determined adjacent the roll of wrapping film from which the wrapping film is being drawn. In which case, a wrapping film follower roller in rotational engagement with the wrapping film could be provided, and the rotational speed of the wrapping film follower roller would be monitored by the second monitoring means, from which the linear speed of the wrapping film would be determined at the second location. Indeed, it is envisaged that such a wrapping film follower roller could be located in engagement with the circumferential periphery of the roll of wrapping film from which the wrapping film is being drawn.

It is also envisaged that the wrapping film may be subjected to stretching as it is being drawn from the roll of wrapping film, and in which case, the linear speed of the wrapping film at the second location would be determined from the rotational speed of a wrapping film follower which would be in rotational engagement with the circumferential periphery of the roll from which the wrapping film is being drawn.

While the interface means for inputting a selectable value of the predefined degree of stretch with which the wrapping film is to be applied to the bale in the bale forming chamber has been described as comprising a keypad, any other suitable input means may be provided. For example, it is envisaged that the input means may comprise a touch screen. It is also envisaged that the input means may comprise a remote communication device with which the microprocessor of the baler would be in wireless communication. Additionally, it will be appreciated that while it is desirable, it is not essential that the value of the predefined degree of stretch with which the wrapping film is to be applied to the bale should be selectable.

It is also envisaged that while a single tensioning means has been described as comprising a tensioning roller, it is envisaged that a number of tensioning means may be provided between the roll from which the wrapping material is being dispensed and the rotating bale in the bale forming chamber, and in which case, the cumulative stretch induced in the wrapping material by the respective tensioning means would be the degree of stretch with which the wrapping material is being applied to the bale in the bale forming chamber. In which case, the linear speed of the wrapping material adjacent the first location would be determined adjacent the bale, and the linear speed of the wrapping material adjacent the second location would be determined between the first of the tensioning means and the roll of the wrapping material from which the wrapping material is being drawn, or adjacent the roll from which the wrapping material is being drawn, or adjacent the first of the tensioning means before any stretch is induced in the wrapping material. Needless to say, any other tensioning means besides a tensioning roller may be used for tensioning the wrapping material.

While in the embodiment of the invention described with reference to Figs. 1 to 7 the value of the degree of stretch with which the wrapping film is being applied to the bale has been described as being 0.25, or 25%, it will be appreciated that the wrapping film may be applied to the bale with any other suitable or desirable value of the predefined degree of stretch. For example, depending on the wrapping material, the selectable value of the predefined degree of stretch may be within the range of 0.1 or 10% to 0.4 or 40%, and may range between 0.1 or 10% to 0.3 or 30%. It is envisaged that in the case of some wrapping materials the selectable value of the predefined degree of stretch may be selectable between 0.1 or 10% to 0.15 or 15%, while with other wrapping materials the selectable value of the predefined degree of stretch may lie in the range of 0.25 or 25% to 0.3 or 30%.

While the wrapping film 3 has been described as being adhesive coated on one side, while this is advantageous, it may not be essential, and in certain cases, it is envisaged that the wrapping film would not be adhesive coated.

While a specific type of wrapping film has been described, it will be readily apparent to those skilled in the art that any other suitable wrapping film or indeed any other suitable wrapping material may be used for wrapping the bale with the wrapping material being applied to the bale with a predefined degree of stretch in the feed direction of the wrapping film.

## Claims

1. A method for controlling circumferentially wrapping a cylindrical bale (2) rotating in a bale forming chamber (12,82) of a baler (1,70) with wrapping material (3) drawn from a roll (4) thereof through a tensioning means (32), so that the bale (2) is wrapped with the wrapping material (3) with a predefined degree of stretch in the wrapping material (3) in the feed direction thereof, **characterised in that** the method comprises:
monitoring a value of a characteristic indicative of the linear speed of the wrapping material (3) at a first location adjacent the bale (2),
monitoring a value of a characteristic indicative of the linear speed of the wrapping material (3) at a second location before tensioning thereof by the tensioning means (32),
computing the value of the degree of stretch in the wrapping material (3) in the feed direction with which the wrapping material (3) is being applied to the bale (2) from the monitored values of the characteristics indicative of the linear speeds of the wrapping material (3) at the first and second locations, and
altering the linear speed of the wrapping material (3) adjacent one of the first and second locations relative to the linear speed of the wrapping material (3) adjacent the other one of the first and second locations in response to the computed value of the degree of stretch not being equal to the value of the predefined degree of stretch until the wrapping material (3) is being applied to the bale (2) with the predefined degree of stretch.

2. A method as claimed in Claim 1 **characterised in that** the monitored characteristic indicative of the linear speed of the wrapping material (3) at the first location comprises one of:
the rotational speed of the bale (2), and
the rotational speed of a first wrapping material follower roller engageable with and rotatable with the wrapping material (3) at the first location.

3. A method as claimed in Claim 1 or 2 **characterised in that** the second location comprises a location adjacent one of the tensioning means (32) and the roll (4) of the wrapping material (3).

4. A method as claimed in any preceding claim **characterised in that** the monitored characteristic indicative of the linear speed of the wrapping material (3) adjacent the second location comprises one of:
the rotational speed of a tensioning roller (32) of the tensioning means, and
the rotational speed of a second wrapping material follower roller engageable with and rotatable with the wrapping material (3) adjacent the second location.

5. A method as claimed in any preceding claim **characterised in that** the linear speed of the wrapping material (3) adjacent the second location is altered in response to the computed value of the degree of stretch in the feed direction of the wrapping material (3) being applied to the bale (2) not being equal to the value of the predefined degree of stretch.

6. A method as claimed in Claim 5 **characterised in that** the linear speed of the wrapping material (3) adjacent the second location is altered by altering the tension induced in the wrapping material (3) by the tensioning means (32).

7. A method as claimed in any preceding claim **characterised in that** the degree of stretch in the feed direction in the wrapping material (3) with which the wrapping material (3) is being applied to the bale (2) is computed by determining the ratio of the difference of the linear speeds of the wrapping material (3) adjacent the first and second locations to the linear speed of the wrapping material (3) adjacent the second location.

8. A method as claimed in any preceding claim **characterised in that** the value of the predefined degree of stretch is selectable.

9. A method as claimed in any preceding claim **characterised in that** the wrapping material (3) comprises a plastics film material, and the bale (2) comprises a bale of forage material.

10. A system for controlling circumferentially wrapping a cylindrical bale (2) rotating in a bale forming chamber (12,82) of a baler (1,70) with wrapping material (3) drawn from a roll (4) thereof through a tensioning means (32), so that the bale (2) is wrapped with the wrapping material (3) with a predefined degree of stretch in the wrapping material (3) in the feed direction, **characterised in that** the system (50) comprises:
a first monitoring means (51) configured to monitor a value of a characteristic indicative of the linear speed of the wrapping material (3) at a first location adjacent the bale (2),
a second monitoring means (54) configured to monitor a value of a characteristic indicative of the linear speed of the wrapping material (3) at a second location before tensioning thereof by the tensioning means (32),
a computing means (56) configured to read signals from the first and second monitoring means (51,54) indicative of the monitored values of the characteristics of the linear speed of the wrapping material (3) at the first and second locations, and to compute the value of the degree of stretch in the wrapping material (3) in the feed direction with which the wrapping material (3) is being applied to the bale (2) from the signals read from the first and second monitoring means (51,54), and
a control means (56) for altering the linear speed of the wrapping material (3) adjacent one of the first and second locations relative to the linear speed of the wrapping material (3) adjacent the other one of the first and second locations in response to the computed value of the degree of stretch not being equal to the value of the predefined degree of stretch until the wrapping material (3) is being applied to the bale (2) with the predefined degree of stretch.

11. A system as claimed in Claim 10 **characterised in that** the second monitoring means (54) is configured to monitor the linear speed of the wrapping material (3) adjacent one of the tensioning means (32) and the roll (4) of the wrapping material (3).

12. A system as claimed in Claim 10 or 11 **characterised in that** the computing means (56) comprises a signal processor (56), and the signal processor (56) is configured to compute the value of the degree of stretch in the feed direction in the wrapping material (3) with which the wrapping material (3) is being applied to the bale (2) by determining the ratio of the difference of the linear speeds of the wrapping material (3) adjacent the first and second locations to the linear speed of the wrapping material (3) adjacent the second location.

13. A system as claimed in any of Claims 10 to 12 **characterised in that** a storing means (56) is provided for storing the value of the predefined degree of stretch, and the value of the predefined degree of stretch is selectable.

14. A baler for forming a circumferentially wrapped cylindrical bale (2), the baler (1,70) comprising a bale forming chamber (12,82) within which the bale (2) is formed, a wrapping material dispenser (30,87) for dispensing wrapping material (3) from a roll (4) thereof through a tensioning means (32) into the bale forming chamber (12,82) for circumferentially wrapping the bale (2) in the bale forming chamber (12,82), **characterised in that** a system (50) as claimed in any of Claims 10 to 13 is provided for controlling circumferential wrapping of the bale (2) in the bale forming chamber (12,82) so that the wrapping material (3) is applied to the bale (2) with a predefined degree of stretch in the feed direction of the wrapping material (3).

15. A method for forming material into a cylindrical bale (2) and circumferentially wrapping the bale (2) with wrapping material (3), the method comprising:
feeding the material to be baled into a bale forming chamber (12,82) of a baler (1,70),
rotating the material to be baled in the bale forming chamber (12,82) to form the bale (2), and
feeding the wrapping material (3) through a tensioning means (32) into the bale forming chamber (12,82) to circumferentially wrap the formed bale (2) rotating in the bale forming chamber (12,82), **characterised in that** the method further comprises:
monitoring a value of a characteristic indicative of the linear speed of the wrapping material (3) at a first location adjacent the bale (2),
monitoring a value of a characteristic indicative of the linear speed of the wrapping material (3) at a second location before tensioning thereof by the tensioning means (32),
computing the value of a degree of stretch in the wrapping material (3) in the feed direction with which the wrapping material (3) is being applied to the bale (2) from the monitored values of the characteristics indicative of the linear speeds of the wrapping material (3) adjacent the first and second locations, and
altering the linear speed of the wrapping material (3) adjacent one of the first and second locations relative to the linear speed of the wrapping material (3) adjacent the other one of the first and second locations in response to the computed value of the degree of stretch not being equal to the value of a predefined degree of stretch until the wrapping material (3) is being applied to the bale (2) with the predefined degree of stretch.

## Patentansprüche

1. Verfahren zum Steuern eines umlaufenden Umhüllens eines zylindrischen Ballens (2), der in einer Ballenformungskammer (12,82) einer Ballenpresse (1,70) rotiert, mit Umhüllungsmaterial (3), das von einer Rolle (4) davon durch eine Spanneinrichtung (32) gezogen wird, sodass der Ballen (2) mit dem Umhüllungsmaterial (3) mit einem vorbestimmten Ausdehnungsgrad im Umhüllungsmaterial (3) in der Einspeisungsrichtung davon umhüllt wird, **dadurch gekennzeichnet, dass** das Verfahren umfasst:
Überwachen eines Wertes einer Eigenschaft, die für die lineare Geschwindigkeit des Umhüllungsmaterials (3) an einer ersten Position neben dem Ballen (2) indikativ ist,
Überwachen eines Wertes einer Eigenschaft, die für die lineare Geschwindigkeit des Umhüllungsmaterials (3) an einer zweiten Position vor dem Spannen davon durch die Spanneinrichtung (32) indikativ ist,
Berechnen des Wertes des Ausdehnungsgrades im Umhüllungsmaterial (3) in der Einspeisungsrichtung, mit dem das Umhüllungsmaterial (3) auf den Ballen (2) aufgebracht wird, aus den überwachten Werten der Eigenschaften, die für die linearen Geschwindigkeiten des Umhüllungsmaterials (3) an den ersten und zweiten Positionen indikativ sind, und
Ändern der linearen Geschwindigkeit des Umhüllungsmaterials (3) neben einer der ersten und zweiten Positionen relativ zu der linearen Geschwindigkeit des Umhüllungsmaterials (3) neben der anderen der ersten und zweiten Positionen in Erwiderung darauf, dass der berechnete Wert des Ausdehnungsgrades nicht gleich dem Wert des vorbestimmten Ausdehnungsgrades ist, bis das Umhüllungsmaterial (3) auf den Ballen (2) mit dem vorbestimmten Ausdehnungsgrad aufgebracht wird.

2. Verfahren nach Anspruch 1, **dadurch gekennzeichnet, dass** die überwachte Eigenschaft, die für die lineare Geschwindigkeit des Umhüllungsmaterials (3) an der ersten Position indikativ ist, eines der folgenden umfasst:
die Rotationsgeschwindigkeit des Ballens (2), und
die Rotationsgeschwindigkeit eines ersten Rollenhebels bezüglich des Umhüllungsmaterials, der mit dem Umhüllungsmaterial (3) an der ersten Position einkuppelbar und rotierbar ist.

3. Verfahren nach Anspruch 1 oder 2, **dadurch gekennzeichnet, dass** die zweite Position eine Position neben einem der Spanneinrichtung (32) und der Rolle (4) des Umhüllungsmaterials (3) umfasst.

4. Verfahren nach einem der vorhergehenden Ansprüche, **dadurch gekennzeichnet, dass** die überwachte Eigenschaft, die für die lineare Geschwindigkeit des Umhüllungsmaterials (3) neben der zweiten Position indikativ ist, eines der folgenden umfasst:
die Rotationsgeschwindigkeit eines Spannrollers (32) der Spanneinrichtung, und
die Rotationsgeschwindigkeit eines zweiten Rollenhebels bezüglich des Umhüllungsmaterials, der mit dem Umhüllungsmaterial (3) neben der zweiten Position einkuppelbar und rotierbar ist.

5. Verfahren nach einem der vorhergehenden Ansprüche, **dadurch gekennzeichnet, dass** die lineare Geschwindigkeit des Umhüllungsmaterials (3) neben der zweiten Position geändert wird in Erwiderung darauf, dass der berechnete Wert des Ausdehnungsgrades in der Einspeisungsrichtung des Umhüllungsmaterials (3), der auf den Ballen (2) angewandt wird, nicht gleich dem Wert des vorbestimmten Ausdehnungsgrades ist.

6. Verfahren nach Anspruch 5, **dadurch gekennzeichnet, dass** die lineare Geschwindigkeit des Umhüllungsmaterials (3) neben der zweiten Position durch ein Ändern der Spannung geändert wird, die im Umhüllungsmaterial (3) durch die Spanneinrichtung (32) induziert wird.

7. Verfahren nach einem der vorhergehenden Ansprüche, **dadurch gekennzeichnet, dass** der Ausdehnungsgrad in der Einspeisungsrichtung im Umhüllungsmaterial (3), mit dem das Umhüllungsmaterial (3) auf den Ballen (2) aufgebracht wird, durch ein Bestimmen des Verhältnisses zwischen der Differenz der linearen Geschwindigkeiten des Umhüllungsmaterials (3) neben den ersten und zweiten Positionen und der linearen Geschwindigkeit des Umhüllungsmaterials (3) neben der zweiten Position berechnet wird.

8. Verfahren nach einem der vorhergehenden Ansprüche, **dadurch gekennzeichnet, dass** der Wert des vorbestimmten Ausdehnungsgrades auswählbar ist.

9. Verfahren nach einem der vorhergehenden Ansprüche, **dadurch gekennzeichnet, dass** das Umhüllungsmaterial (3) ein Plastikfilmmaterial umfasst, und dass der Ballen (2) einen Ballen aus Futtermaterial umfasst.

10. System zum Steuern eines umlaufenden Umhüllens eines zylindrischen Ballens (2), der in einer Ballenformungskammer (12,82) einer Ballenpresse (1,70) rotiert, mit Umhüllungsmaterial (3), das von einer Rolle (4) davon durch eine Spanneinrichtung (32) gezogen wird, sodass der Ballen (2) mit dem Umhüllungsmaterial (3) mit einem vorbestimmten Ausdehnungsgrad im Umhüllungsmaterial (3) in der Einspeisungsrichtung umhüllt wird, **dadurch gekennzeichnet, dass** das System (50) umfasst:
eine erste Überwachungseinheit (51), die konfiguriert ist, einen Wert einer Eigenschaft, die für die lineare Geschwindigkeit des Umhüllungsmaterials (3) an einer ersten Position neben dem Ballen (2) indikativ ist, zu überwachen,
eine zweite Überwachungseinheit (54), die konfiguriert ist, einen Wert einer Eigenschaft, die für die lineare Geschwindigkeit des Umhüllungsmaterials (3) an einer zweiten Position vor dem Spannen davon durch die Spanneinrichtung (32) indikativ ist, zu überwachen,
eine Berechnungseinheit (56), die konfiguriert ist, Signale von den ersten und zweiten Überwachungseinheiten (51,54) zu lesen, die für die überwachten Werte der Eigenschaften der linearen Geschwindigkeit des Umhüllungsmaterials (3) an den ersten und zweiten Positionen indikativ sind, und den Wert des Ausdehnungsgrades im Umhüllungsmaterial (3) in der Einspeisungsrichtung, mit dem das Umhüllungsmaterial (3) auf den Ballen (2) aufgebracht wird, aus den Signalen zu berechnen, die von den ersten und zweiten Überwachungseinheiten (51,54) gelesen werder, in Steuereinheit (56) zum Ändern der linearen Geschwindigkeit des Umhüllungsmaterials (3) neben einer der ersten und zweiten Positionen relativ zu der linearen Geschwindigkeit des Umhüllungsmaterials (3) neben der anderen der ersten und zweiten Positionen in Erwiderung darauf, dass der berechnete Wert des Ausdehnungsgrades nicht gleich dem Wert des vorbestimmten Ausdehnungsgrades ist, bis das Umhüllungsmaterial (3) auf den Ballen (2) mit dem vorbestimmten Ausdehnungsgrad aufgebracht ist.

11. System nach Anspruch 10, **dadurch gekennzeichnet, dass** die zweite Überwachungseinheit (54) konfiguriert ist, die lineare Geschwindigkeit des Umhüllungsmaterials (3) neben einem der Spanneinrichtung (32) und der Rolle (4) des Umhüllungsmaterials (3) zu überwachen.

12. System nach Anspruch 10 oder 11, **dadurch gekennzeichnet, dass** die Berechnungseinheit (56) einen Signalprozessor (56) umfasst, und der Signalprozessor (56) konfiguriert ist, den Wert des Ausdehnungsgrades in der Einspeisungsrichtung im Umhüllungsmaterial (3) zu berechnen, mit dem das Umhüllungsmaterial (3) auf den Ballen (2) aufgebracht wird, durch Bestimmen des Verhältnisses zwischen der Differenz der linearen Geschwindigkeiten des Umhüllungsmaterials (3) neben den ersten und zweiten Positionen und der linearen Geschwindigkeit des Umhüllungsmaterials (3) neben der zweiten Position.

13. System nach einem der Ansprüche 10 bis 12, **dadurch gekennzeichnet, dass** eine Speichereinheit (56) vorgesehen ist zum Speichern des Wertes des vorbestimmten Ausdehnungsgrades, und wobei der Wert des vorbestimmten Ausdehnungsgrades auswählbar ist.

14. Eine Ballenpresse zum Formen eines umlaufend umhüllten zylindrischen Ballens (2), die Ballenpresse (1,70) umfassend: eine Ballenformungskammer (12,82) innerhalb der der Ballen (2) geformt wird, ein Umhüllungsmaterialausgeber (30,87) zum Ausgeben von Umhüllungsmaterial (3) von einer Rolle (4) davon durch eine Spanneinheit (32) in die Ballenformungskammer (12,82) zum umlaufenden Umhüllen des Ballens (2) in der Ballenformungskammer (12,82), **dadurch gekennzeichnet, dass** das System (50) wie in einem der Ansprüche 10 bis 13 vorgesehen ist zum Steuern des umlaufenden Umhüllens des Ballens (2) in der Ballenformungskammer (12,82), sodass das Umhüllungsmaterial (3) auf den Ballen (2) mit einem vorbestimmten Ausdehnungsgrad in der Einspeisungsrichtung des Umhüllungsmaterials (3) aufgebracht wird.

15. Verfahren zum Formen eines Materials in einen zylindrischen Ballen (2) und umlaufenden Umhüllen des Ballens (2) mit Umhüllungsmaterial (3), das Verfahren umfassend:
Einspeisen des zu bündelnden Materials in eine Ballenformungskammer (12,82) einer Ballenpresse (1,70),
Rotieren des zu bündelnden Materials in der Ballenformungskammer (12,82), um den Ballen (2) zu formen, und
Einspeisen des Umhüllungsmaterials (3) durch eine Spanneinheit (32) in die Ballenformungskammer (12,82), um den geformten Ballen (2) umlaufend zu umhüllen, der in der Ballenformungskammer (12,82) rotiert, **dadurch gekennzeichnet, dass** das Verfahren weiter umfasst:
Überwachen eines Wertes einer Eigenschaft, die für die lineare Geschwindigkeit des Umhüllungsmaterials (3) an einer ersten Position neben dem Ballen (2) indikativ ist,
Überwachen eines Wertes einer Eigenschaft, die für die lineare Geschwindigkeit des Umhüllungsmaterials (3) an einer zweiten Position vor dem Spannen davon durch die Spanneinrichtung (32) indikativ ist,
Berechnen des Wertes des Ausdehnungsgrades im Umhüllungsmaterial (3) in der Einspeisungsrichtung, mit dem das Umhüllungsmaterial (3) auf den Ballen (2) aufgebracht wird, aus den überwachten Werten der Eigenschaften, die für die linearen Geschwindigkeiten des Umhüllungsmaterials (3) neben den ersten und zweiten Positionen indikativ sind, und
Ändern der linearen Geschwindigkeit des Umhüllungsmaterials (3) neben einer der ersten und zweiten Positionen relativ zu der linearen Geschwindigkeit des Umhüllungsmaterials (3) neben der anderen der ersten und zweiten Positionen in Erwiderung darauf, dass der berechnete Wert des Ausdehnungsgrades nicht gleich dem Wert des vorbestimmten Ausdehnungsgrades ist, bis das Umhüllungsmaterial (3) auf den Ballen (2) mit dem vorbestimmten Ausdehnungsgrad aufgebracht wird.

## Revendications

1. Procédé pour contrôler l'emballage circonférentiel d'une balle cylindrique (2) tournant dans une chambre de formation de balle (12, 82) d'une ramasseuse-presse (1, 70) avec le matériau d'emballage (3) tiré de son rouleau (4) par le biais d'un moyen de tension (32), de sorte que la balle (2) est emballée avec le matériau d'emballage (3) avec un degré d'étirement prédéfini du matériau d'emballage (3) dans sa direction d'alimentation, **caractérisé en ce que** le procédé comprend les étapes consistant à :
surveiller une valeur d'une caractéristique indicative de la vitesse linéaire du matériau d'emballage (3) à un premier emplacement adjacent à la balle (2),
surveiller une valeur d'une caractéristique indicative de la vitesse linéaire du matériau d'emballage (3) à un second emplacement avant sa tension par le moyen de tension (32),
calculer la valeur du degré d'étirement du matériau d'emballage (3) dans la direction d'alimentation avec lequel le matériau d'emballage (3) est appliqué sur la balle (2) à partir des valeurs surveillées des caractéristiques indicatives des vitesses linéaires du matériau d'emballage (3) aux premier et second emplacements, et
modifier la vitesse linéaire du matériau d'emballage (3) adjacent à l'un des premier et second emplacements par rapport à la vitesse linéaire du matériau d'emballage (3) adjacent à l'autre parmi les premier et second emplacements en réponse à la valeur calculée du degré d'étirement qui n'est pas égale à la valeur du degré d'étirement prédéfini jusqu'à ce que le matériau d'emballage (3) soit appliqué sur la balle (2) avec le degré d'étirement prédéfini.

2. Procédé selon la revendication 1, **caractérisé en ce que** la caractéristique surveillée indicative de la vitesse linéaire du matériau d'emballage (3) au premier emplacement comprend l'une parmi :
la vitesse de rotation de la balle (2), et
la vitesse de rotation d'un premier rouleau suiveur de matériau d'emballage pouvant se mettre en prise avec et pouvant tourner avec le matériau d'emballage (3) au premier emplacement.

3. Procédé selon la revendication 1 ou 2, **caractérisé en ce que** le second emplacement comprend un emplacement adjacent à l'un parmi le moyen de tension (32) et le rouleau (4) du matériau d'emballage (3).

4. Procédé selon l'une quelconque des revendications précédentes, **caractérisé en ce que** la caractéristique surveillée indicative de la vitesse linéaire du matériau d'emballage (3) adjacent au second emplacement comprend l'une parmi :
la vitesse de rotation d'un rouleau de tension (32) du moyen de tension, et
la vitesse de rotation d'un second rouleau suiveur de matériau d'emballage pouvant se mettre en prise avec et pouvant tourner avec le matériau d'emballage (3) adjacent au second emplacement.

5. Procédé selon l'une quelconque des revendications précédentes, **caractérisé en ce que** la vitesse linéaire du matériau d'emballage (3) adjacent au second emplacement est modifiée en réponse à la valeur.calculée du degré d'étirement dans la direction d'alimentation du matériau d'emballage (3) appliqué sur la balle (2) qui n'est pas égale à la valeur du degré d'étirement prédéfini.

6. Procédé selon la revendication 5, **caractérisé en ce que** la vitesse linéaire du matériau d'emballage (3) adjacent au second emplacement est modifiée en modifiant la tension induite dans le matériau d'emballage (3) par le moyen de tension (32).

7. Procédé selon l'une quelconque des revendications précédentes, **caractérisé en ce que** le degré d'étirement dans la direction d'alimentation du matériau d'emballage (3) avec lequel le matériau d'emballage (3) est appliqué sur la balle (2) est calculé en déterminant le rapport de la différence des vitesses linéaires du matériau d'emballage (3) adjacent aux premier et second emplacements sur la vitesse linéaire du matériau d'emballage (3) adjacent au second emplacement.

8. Procédé selon l'une quelconque des revendications précédentes, **caractérisé en ce que** la valeur du degré d'étirement prédéfini peut être sélectionnée.

9. Procédé selon l'une quelconque des revendications précédentes, **caractérisé en ce que** le matériau d'emballage (3) comprend un matériau de film plastique, et la balle (2) comprend une balle de fourrage.

10. Système pour contrôler l'emballage circonférentiel d'une balle cylindrique (2) tournant dans une chambre de formation de balle (12, 82) d'une ramasseuse-presse (1, 70) avec le matériau d'emballage (3) tiré de son rouleau (4) par le biais d'un moyen de tension (32), de sorte que la balle (2) est emballée avec le matériau d'emballage (3) avec un degré d'étirement prédéfini du matériau d'emballage (3) dans la direction d'alimentation, **caractérisé en ce que** le système (50) comprend :
un premier moyen de surveillance (51) configuré pour surveiller une valeur d'une caractéristique indicative de la vitesse linéaire du matériau d'emballage (3) à un premier emplacement adjacent à la balle (2),
un second moyen de surveillance (54) configuré pour surveiller une valeur d'une caractéristique indicative de la vitesse linéaire du matériau d'emballage (3) à un second emplacement avant sa tension par le moyen de tension (32),
un moyen de calcul (56) configuré pour lire des signaux des premier et second moyens de surveillance (51, 54) indicatifs des valeurs surveillées des caractéristiques de la vitesse linéaire du matériau d'emballage (3) aux premier et second emplacements, et pour calculer la valeur du degré d'étirement du matériau d'emballage (3) dans la direction d'alimentation avec lequel le matériau d'emballage (3) est appliqué sur la balle (2) à partir des signaux lus à partir des premier et second moyens de surveillance (51, 54), et
un moyen de commande (56) pour modifier la vitesse linéaire du matériau d'emballage (3) adjacent à l'un des premier et second emplacements par rapport à la vitesse linéaire du matériau d'emballage (3) adjacent à l'autre parmi les premier et second emplacements en réponse à la valeur calculée du degré d'étirement qui n'est pas égale à la valeur du degré d'étirement prédéfini jusqu'à ce que le matériau d'emballage (3) soit appliqué sur la balle (2) avec le degré d'étirement prédéfini.

11. Système selon la revendication 10, **caractérisé en ce que** le second moyen de surveillance (54) est configuré pour surveiller la vitesse linéaire du matériau d'emballage (3) adjacent à l'un parmi le moyen de tension (32) et le rouleau (4) de matériau d'emballage (3).

12. Système selon la revendication 10 ou 11, **caractérisé en ce que** le moyen de calcul (56) comprend un processeur de signaux (56) et le processeur de signaux (56) est configuré pour calculer la valeur du degré d'étirement dans la direction d'alimentation du matériau d'emballage (3) avec lequel le matériau d'emballage (3) est appliqué sur la balle (2) en déterminant le rapport de la différence des vitesses linéaires du matériau d'emballage (3) adjacent aux premier et second emplacements sur la vitesse linéaire du matériau d'emballage (3) adjacent au second emplacement.

13. Système selon l'une quelconque des revendications 10 à 12, **caractérisé en ce qu'**un moyen de mémorisation (56) est prévu pour mémoriser la valeur du degré d'étirement prédéfini, et la valeur du degré d'étirement prédéfini peut être sélectionnée.

14. Ramasseuse-presse pour former une balle cylindrique (2) emballée de manière circonférentielle, la ramasseuse-presse (1, 70) comprenant une chambre de formation de balle (12, 82) à l'intérieur de laquelle la balle (2) est formée, un distributeur de matériau d'emballage (30, 87) pour distribuer le matériau d'emballage (3) à partir de son rouleau (4) par le biais d'un moyen de tension (32) dans la chambre de formation de balle (12, 82) pour emballer de manière circonférentielle la balle (2) dans la chambre de formation de balle (12, 82), **caractérisée en ce qu'**un système (50) selon l'une quelconque des revendications 10 à 13 est prévu pour contrôler l'emballage circonférentiel de la balle (2) dans la chambre de formation de balle (12, 82) de sorte que le matériau d'emballage (3) est appliqué sur la balle (2) avec un degré d'étirement prédéfini dans la direction d'alimentation du matériau d'emballage (3).

15. Procédé pour former un matériau en une balle cylindrique (2) et emballer de manière circonférentielle la balle (2) avec un matériau d'emballage (3), le procédé comprenant les étapes consistant à :
amener le matériau à mettre en balle dans une chambre de formation de balle (12, 82) d'une ramasseuse-presse (1, 70),
faire tourner le matériau à mettre en balle dans la chambre de formation de balle (12, 82) afin de former la balle (2), et
amener le matériau d'emballage (3) par le biais d'un moyen de tension (32) dans la chambre de formation de balle (12, 82) pour emballer de manière circonférentielle la balle (2) formée tournant dans la chambre de formation de balle (12, 82), **caractérisé en ce que** le procédé comprend en outre les étapes consistant à :
surveiller une valeur d'une caractéristique indicative de la vitesse linéaire du matériau d'emballage (3) à un premier emplacement adjacent à la balle (2),
surveiller une valeur d'une caractéristique indicative de la vitesse linéaire du matériau d'emballage (3) à un second emplacement avant sa tension par le moyen de tension (32),
calculer la valeur d'un degré d'étirement du matériau d'emballage (3) dans la direction d'alimentation avec lequel le matériau d'emballage (3) est appliqué sur la balle (2) à partir des valeurs surveillées des caractéristiques indicatives des vitesses linéaires du matériau d'emballage (3) adjacent aux premier et second emplacements, et
modifier la vitesse linéaire du matériau d'emballage (3) adjacent à l'un parmi les premier et second emplacements par rapport à la vitesse linéaire du matériau d'emballage (3) adjacent à l'autre parmi les premier et second emplacements en réponse à la valeur calculée du degré d'étirement qui n'est pas égale à la valeur d'un degré d'étirement prédéfini jusqu'à ce que le matériau d'emballage (3) soit appliqué sur la balle (2) avec le degré d'étirement prédéfini.
